# EUROPEAN PATENT APPLICATION

(11) **EP 4 848 881 A1**
(43) Date of publication of application: **02.12.2026**
(21) Application number: 24920667.3
(22) Date of filing: 17.07.2024
(51) Int. Cl.: H04W 76/18, H04W 76/12, H04W 76/22, H04W 76/32, H04W 48/18

(54) **METHOD AND APPARATUS FOR PROCESSING ALWAYS-ON PDU SESSION OF NETWORK SLICING BY CONSIDERING SERVICE AREA IN WIRELESS COMMUNICATION SYSTEM**

(30) Priority: 22.01.2024 KR 20240009310
(71) Applicant: Hyundai Mobis Co., Ltd., Gangnam-gu Seoul 06141 (KR)
(72) Inventor: KIM, Jae Hyun, Seoul 07782 (KR)
(74) Representative: Jung, Minkyu
(86) International application number: PCT/KR2024/010224
(87) International publication number: WO 2025/159251

(57) **Abstract**

One disclosure of the present specification provides a method by which a terminal operates in a wireless communication system. The method may comprise the steps of: transmitting a protocol data unit (PDU) session request message associated with first network slice selection assistance information (NSSAI); and receiving a PDU session reject message in response to the transmitted PDU session request message. The received PDU session reject message is used for establishment of an always-on PDU session associated with second NSSAI, and the first NSSAI and the second NSSAI can be partially allowed pieces of NSSAI that differ from each other.

## Description

### [Technical Field]

The present specification relates to a 3GPP wireless communication system.

### [Background Art]

Driven by the success of fourth-generation (4G) mobile communication technologies such as long term evolution (LTE) and LTE-advanced (LTE-A), interest in next-generation, that is, fifth-generation (5G) mobile communication has been increasing, and related research is actively underway.

The 5G mobile communication, as defined by the International Telecommunication Union (ITU), refers to providing data transmission rates of up to 20 Gbps and user-experienced transmission rates of at least 100 Mbps anywhere, and is officially referred to as "IMT-2020."

The 5G mobile communication supports multiple numerologies or subcarrier spacing (SCS) to support various services. For example, when the SCS is 15 kHz, the SCS supports a wide area in traditional cellular bands; when the SCS is 30 kHz/60 kHz, the SCS supports dense-urban environments, lower latency, and wider carrier bandwidth; and when the SCS is 60 kHz or higher, the SCS supports a bandwidth greater than 24.25 GHz to overcome phase noise.

The NR frequency band is defined by two types of frequency ranges (FR1 and FR2). FR1 ranges from 410 MHz to 7125 MHz, and FR2 ranges from 24250 MHz to 52600 MHz, which may refer to millimeter wave (mmW).

For convenience of description, among the frequency ranges used in NR systems, FR1 may refer to a "sub 6GHz range," and FR2 may refer to an "above 6GHz range," which may be referred to as millimeter wave (mmW).

**[Table 1]**

| Frequency Range designation | Corresponding frequency range | Subcarrier Spacing |
|---|---|---|
| FR1 | 410 MHz to 7125 MHz | 15, 30, 60 kHz |
| FR2 | 24250 MHz to 52600 MHz | 60, 120, 240 kHz |

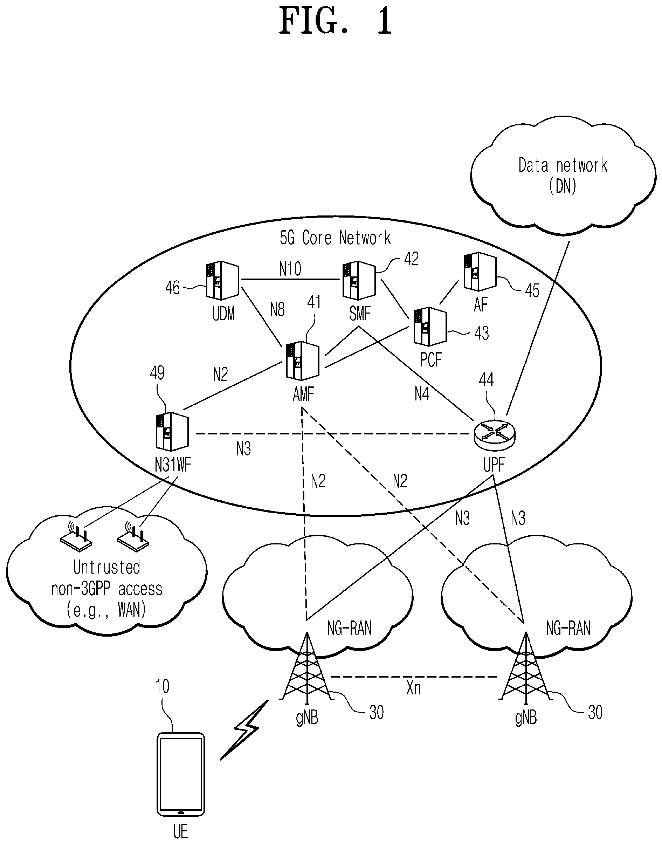

The numerical values of the frequency ranges in NR systems may be changed. For example, FR1 may include a band from 410 MHz to 7125 MHz as shown in Table 1. That is, FR1 may include a frequency band of 6 GHz (or 5850, 5900, 5925 MHz, etc.) or higher. For example, frequency bands of 6 GHz (or 5850, 5900, 5925 MHz, etc.) or higher included within FR1 may include unlicensed bands. The unlicensed bands may be used for various purposes, for example, for communication for vehicles (e.g., autonomous driving). FIG. 1 is a view showing a wireless communication system.

A 5G Core (5GC) network may include various components, and FIG. 1 includes some of them, such as an access and mobility management function (AMF) 41, a session management function (SMF) 42, a policy control function (PCF) 43, a user plane function (UPF) 44, an application function (AF) 45, a unified data management (UDM) 46, and a non-3GPP interworking function (N3IWF) 49.

A user equipment (UE) 10 is connected to a data network (DN) through a next generation radio access network (NG-RAN) and the UPF 44.

The UE 10 may also receive data services through untrusted non-3GPP access, such as a wireless local area network (WLAN). To connect the non-3GPP access to a core network, the N3IWF 49 may be configured.

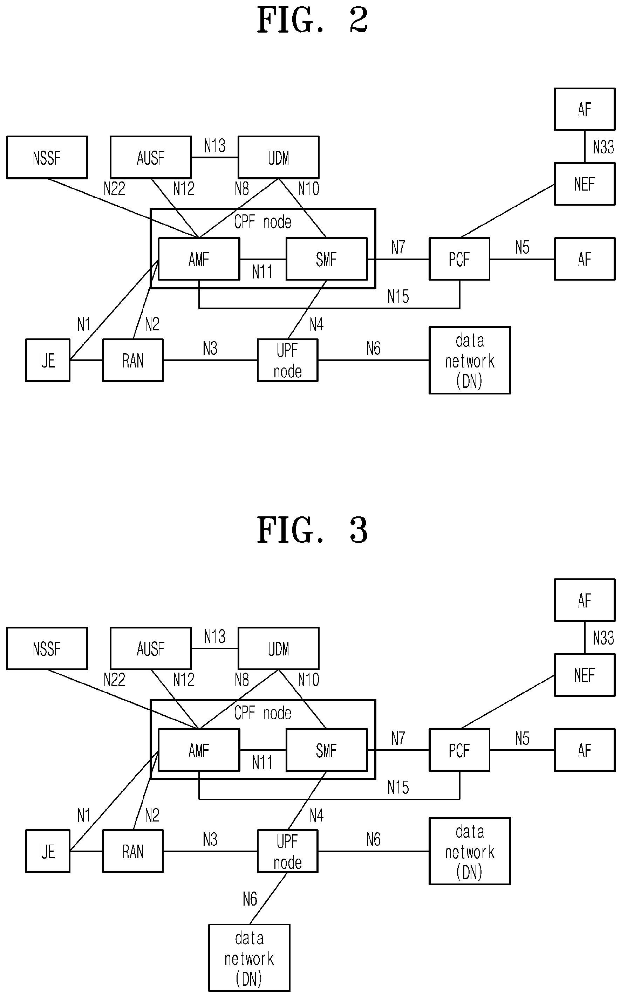

FIG. 2 is an exemplary view showing a structure of the wireless communication system from the perspective of a node.

As can be seen by referring to FIG. 2, the UE is connected to the DN through a radio access network (RAN).

The shown control plane function (CPF) node performs some or all of functions of a mobility management entity (MME) of 4G mobile communication, and some or all of the CPFs of a serving gateway (S-GW) and PDN gateway (P-GW). The CPF node includes the AMF and the SMF.

The shown UPF node is a type of gateway through which user data is transmitted and received. The UPF node may perform some or all of the UPFs of the S-GW and P-GW of the 4G mobile communication.

The shown PCF is a node that controls operator policies.

The shown AF is a server for providing various services to the UE.

The shown UDM is a type of server that manages subscriber information, as in a home subscriber server (HSS) of the 4G mobile communication. The UDM stores and manages subscriber information in a unified data repository (UDR).

The shown authentication server function (AUSF) authenticates and manages the UE.

The shown network slice selection function (NSSF) is a node for network slicing, as will be described below.

The UE may simultaneously access two data networks using multiple protocol data unit or packet data unit (PDU) sessions.

FIG. 3 is another exemplary view showing a structure of a wireless communication system from the perspective of a node.

FIG. 3 shows an architecture for a UE to simultaneously access two data networks using a single PDU session.

Items related to reference points shown in FIGS. 2 and 3 are as follows.

N1 represents a reference point between the UE and the AMF.

N2 represents a reference point between the (R)AN and the AMF.

N3 represents a reference point between the (R)AN and the UPF.

N4 represents a reference point between the SMF and the UPF.

N5 represents a reference point between the PCF and the AF.

N6 represents a reference point between the UPF and the DN.

N7 represents a reference point between the SMF and the PCF.

N8 represents a reference point between the UDM and the AMF.

N9 represents a reference point between the UPF nodes.

N10 represents a reference point between the UDM and the SMF.

N11 represents a reference point between the AMF and the SMF.

N12 represents a reference point between the AMF and the AUSF.

N13 represents a reference point between the UDM and the AUSF.

N14 represents a reference point between the AMF nodes.

N15 represents a reference point between the PCF and the AMF.

N16 represents a reference point between the SMF nodes.

N22 represents a reference point between the AMF and the NSSF.

N33 represents a reference point between a network exposure function (NEF) and the AF.

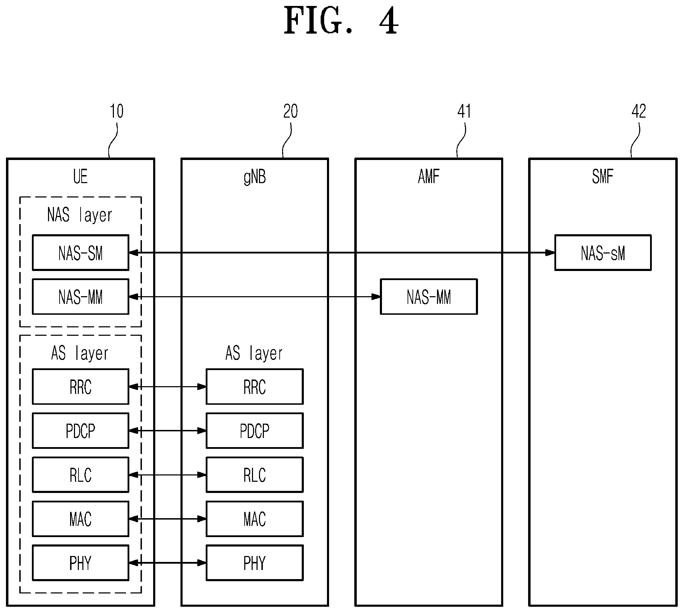

FIG. 4 is an exemplary view showing a structure of a radio interface protocol between a terminal and a network.

The wireless interface protocol is based on the 3GPP wireless access network standard. The wireless interface protocol horizontally consists of a physical layer, a data link layer, and a network layer, and is vertically classified into a user plane for data information transmission and a control plane for signaling transmission.

The protocol layers may be classified into a first layer (L1), a second layer (L2), and a third layer 3 (L3) based on lower three layers of an open system interconnection (OSI) reference model, which is widely known in communication systems.

Hereinafter, each layer of the wireless interface protocol will be described.

The physical layer, which is the first layer, provides an information transfer service using a physical channel. The physical layer is connected to an upper medium access control (MAC) layer through a transport channel, and data between the MAC layer and the physical layer is transmitted through the transport channel. In addition, data is transmitted between different physical layers, that is, between physical layers of a transmitting side and a receiving side, through the physical channel.

The second layer includes the MAC layer, a radio link control (RLC) layer, and a packet data convergence protocol (PDCP) layer.

The third layer includes a radio resource control (RRC) layer. The RRC layer is defined only in the control plane and is responsible for controlling logical channels, transport channels, and physical channels in relation to the configuration, reconfiguration, and release of radio bearers (RBs). In this case, the RB refers to a service provided by the second layer for data transmission between the terminal and the RAN.

A non-access stratum (NAS) layer performs functions such as session management (SM) and mobility management (MM).

The NAS layer is classified into a NAS entity for MM and a NAS entity for SM.
1) The NAS entity for MM provides the following general functions.

As NAS procedures related to the AMF, the following is provided:
- Registration management and access management procedures. The AMF supports the following functions.
- A secure NAS signaling connection (integrity protection and encryption) is established between the UE and the AMF.

2) The NAS entity for SM performs SM between the UE and the SMF.

SM signaling messages are handled , that is, generated and handled, at the NAS-SM layer of the UE and the SMF. The content of the SM signaling messages is not interpreted by the AMF.
- In the case of SM signaling transmission,
- The NAS entity for MM generates a NAS-MM message that includes a security header indicating NAS transport of SM signaling and additional information for a receiving NAS-MM, the NAS-MM message guiding how and where to transmit an SM signaling message.
- Upon receiving the SM signaling, the NAS entity for SM performs an integrity check on the NAS-MM message and interprets the additional information to guide how and where to derive the SM signaling message.

Meanwhile, the RRC layer, the RLC layer, the MAC layer, and the PHY layer located below the NAS layer in FIG. 4 are sometimes collectively referred to as an access stratum (AS).

Network systems for 5G (i.e., 5GC) also support non-3GPP access. A representative example of the non-3GPP access is WLAN access. The WLAN access may include both a trusted WLAN and an untrusted WLAN.

In a system for 5G, the AMF performs registration management (RM) and connection management (CM) for not only 3GPP access, but also non-3GPP access.

### [Disclosure]

### [Technical Problem]

The disclosure of the present specification is directed to providing a method and apparatus for handling a protocol data unit (PDU) session of network slicing in a wireless communication system.

In particular, one embodiment of the present specification is directed to providing a method and apparatus for handling a PDU session that considers the characteristics of a case in which network slice selection assistance information (NSSAI) used for distinguishing the PDU session in network slicing is a partially allowed NSSAI.

In addition, one embodiment of the present specification is directed to providing a method and apparatus for handling a PDU session in a case in which the PDU session is an always-on PDU session among cases in which the partially allowed NSSAI is used.

### [Technical Solution]

One embodiment of the present specification provides a method of operating a terminal in a wireless communication system. The method may include establishing an always-on protocol data unit (PDU) session associated with first network slice selection assistance information (NSSAI), transmitting a PDU session request message associated with the first NSSAI, and receiving a PDU session reject message in response to the transmitted PDU session request message. When the first NSSAI is partially allowed NSSAI, the PDU session reject message may be a PDU session reject message associated with a partial tracking area (TA) within a current registration area (RA), and when the PDU session associated with the first NSSAI is the always-on PDU session, the PDU session reject message may be used to establish a PDU session associated with second NSSAI, which is partially allowed NSSAI different from the first NSSAI.

In addition, one embodiment of the present specification provides a communication device in a wireless communication system. The communication device may include a transceiver, at least one processor, and at least one memory configured to store instructions and is operably electrically connected to the at least one processor. The operations performed based on the instructions being executed by the at least one processor may include establishing an always-on protocol data unit (PDU) session associated with first network slice selection assistance information (NSSAI), transmitting a PDU session request message associated with the first NSSAI, and receiving a PDU session reject message in response to the transmitted PDU session request message. When the first NSSAI is partially allowed NSSAI, the PDU session reject message may be a PDU session reject message associated with a partial tracking area (TA) within a current registration area (RA), and when the PDU session associated with the first NSSAI is the always-on PDU session, the PDU session reject message may be used to establish a PDU session associated with second NSSAI, which is partially allowed NSSAI different from the first NSSAI.

When the PDU session associated with the first NSSAI is not the always-on PDU session, according to the PDU session reject message, the first NSSAI may be maintained, and the establishment of the PDU session associated with the second NSSAI may be deferred.

Meanwhile, the operations may further include, when the PDU session associated with the first NSSAI is the always-on PDU session, transmitting a PDU session establishment request message associated with the second NSSAI even when there is no uplink transmission data after receiving the PDU session reject message.

The PDU session request message may be a PDU session establishment request message or a PDU session modification request message. In addition, the PDU session reject message may be a PDU session establishment reject message or a PDU session modification reject message.

The received PDU session establishment reject message and/or PDU session modification reject message may include a BO timer value and cause information, and based on the BO timer value, the transmission of the PDU session establishment request message and/or the PDU session modification request message associated with the first NSSAI may be back-off.

### [Advantageous Effects]

According to the disclosure of the present specification, before the accurate update/synchronization procedures of the partially allowed NSSAI (and/or NS-AoS) between the terminal and the network are completed, when the terminal performs the always-on PDU session establishment request procedure and/or the PDU session modification request procedure, low latency service connectivity degradation, signaling overhead, and resource waste due to inefficient operation may occur. Accordingly, the network can promptly stop the NAS procedure for unavailable or changed (updated) partially allowed NSSAI for the terminal, also promptly perform always-on PDU session handling, reduce unnecessary signaling overhead, minimize power consumption and resource waste of the terminal and the network, and continuously provide low latency services.

In addition, in one embodiment of the present specification, in case of rejection of the PDU session request for the partially allowed NSSAI, considering that the rejection is associated with the partial TA within the current RA, it is possible to efficiently select and apply either maintaining the session considering mobility of the terminal or reestablishing a session based on another NSSAI.

In addition, in one embodiment of the present specification, when the problematic PDU session is an always-on PDU session, even in the case of rejection for the partially allowed NSSAI as described above, the updated PDU session establishment can be performed immediately regardless of whether the terminal has transmission data, thereby ensuring performance of a latency-sensitive always-on PDU session.

### [Description of Drawings]

FIG. 1 is a view showing a wireless communication system.
FIG. 2 is an exemplary view showing a structure of the wireless communication system from the perspective of a node.
FIG. 3 is another exemplary view showing a structure of a wireless communication system from the perspective of a node.
FIG. 4 is an exemplary view showing a structure of a radio interface protocol between a terminal and a network.
FIGS. 5A and 5B are signal flow diagrams showing exemplary PDU session establishment procedures.
FIGS. 6A and 6B are signal flow diagrams showing exemplary PDU session modification procedures.
FIG. 7 is an exemplary view for describing the concept of network slicing.
FIG. 8 shows a method of operating a terminal according to one embodiment of the present specification.
FIG. 9 shows a configuration block diagram of a processor in which the disclosure of the present specification is implemented.
FIG. 10 shows a device according to one embodiment of the present specification.
FIG. 11 shows a block configuration diagram of a network node according to one embodiment of the present specification.
FIG. 12 is a block diagram showing a configuration of the terminal according to one embodiment of the present specification.
FIG. 13 is a block diagram showing in detail a transceiver of a first device shown in FIG. 10 or a transceiver of the device shown in FIG. 12.
FIG. 14 shows another wireless communication system applicable to the disclosure of the present specification.

### [Mode for Invention]

It should be noted that the technical terms used herein are only used to describe specific embodiments and are not intended to limit the scope of the present specification. In addition, the technical terms used in the present specification should be construed as meanings generally understood by those skilled in the art to which the disclosure of the present specification pertains unless specifically defined otherwise in the present specification, and should not be construed in an excessively comprehensive sense or in an excessively reduced sense. In addition, when the technical terms used in the present specification are incorrect technical terms that fail to accurately express the content and concept of the present specification, it should be understood as being replaced by technical terms that can be correctly understood by those skilled in the art. It should be understood that general terms used in the present specification should be construed according to their meanings as defined in dictionaries or in view of the context, and should not be construed in an overly restrictive manner.

In addition, the singular expression used herein includes the plural expression unless the context states otherwise. In the present application, terms such as "composed of" or "comprising" should not be construed as necessarily including all of the various components or operations described in the specification and should be construed as not including some of the components or some of the operations or further including additional components or operations.

In addition, terms including ordinal numbers such as "first" and "second" may be used to describe various components, but the components should not be limited by these terms. These terms are used only for the purpose of distinguishing one component from another. For example, a first component may be referred to as a second component without departing from the scope of the present disclosure, and similarly, a second component may be referred to as a first component.

When a component is described as being connected or coupled to another component, it may be directly connected or coupled to the other component, or intervening components may be present. On the other hand, when a component is described as being directly connected or directly coupled to another component, no intervening components are present.

Hereinafter, various embodiments will be described in detail with reference to the accompanying drawings, in which the same or similar components are denoted by the same reference numeral regardless of reference numerals, and overlapping descriptions thereof will be omitted. In addition, in describing the present specification, when it is determined that the detailed description of a related known technology may unnecessarily obscure the gist of the present specification, detailed descriptions thereof will be omitted. It should be noted that the accompanying drawings are provided to facilitate understanding of the present specification, and the contents and spirit of the present specification are not limited by the accompanying drawings. The contents and spirit of the present specification should be construed as extending to all modifications, equivalents, and substitutes in addition to those shown in the accompanying drawings.

In the present specification, "A or B" may mean "only A," "only B," or "both A and B." That is, in the present specification, "A or B" may be construed as "A and/or B." For example, in the present specification, "A, B, or C" may mean "only A," "only B," "only C," or "any combination of A, B, and C."

A slash (/) or a comma used in the present specification may mean "and/or." For example, "A/B" may mean "A and/or B." Accordingly, "A/B" may mean "only A," "only B," or "both A and B." For example, "A, B, C" may mean "A, B, or C."

In the present specification, "at least one of A and B" may mean "only A," "only B," or "both A and B." In addition, in the present specification, "at least one of A or B" or "at least one of A and/or B" may be construed as "at least one of A and B."

In addition, in the present specification, "at least one of A, B and C" may mean "only A," "only B," "only C," or any combination of A, B, and C. In addition, "at least one of A, B or C" or "at least one of A, B and/or C" may be construed as "at least one of A, B and C."

In addition, parentheses used in the present specification may mean "for example." Specifically, when represented as "control information (PDCCH)," the PDCCH may be provided as an example of control information. That is, the "control information" in the present specification is not limited to the PDCCH, and the PDCCH may be one example of the "control information." Similarly, even when represented as "control information (i.e., PDCCH)," the PDCCH may be an example of control information.

Technical features described separately in a single drawing of the present specification may be implemented independently or simultaneously.

In the accompanying drawings, a user equipment (UE) is shown as an example, but the shown UE may also be referred to as a UE 100, a UE, a mobile equipment (ME), etc. In addition, the UE may be a portable device such as a laptop computer, a mobile phone, a personal digital assistant (PDA), a smart phone, or a multimedia device, or may be a non-portable device such as a personal computer (PC) or an in-vehicle device.

### <Protocol data unit (PDU) session establishment procedure>

There may be two types of PDU session establishment procedures as follows.
- A PDU session establishment procedure initiated by a UE
- A PDU session establishment procedure initiated by a network. To this end, the network may transmit a device trigger message to the UE's application(s).

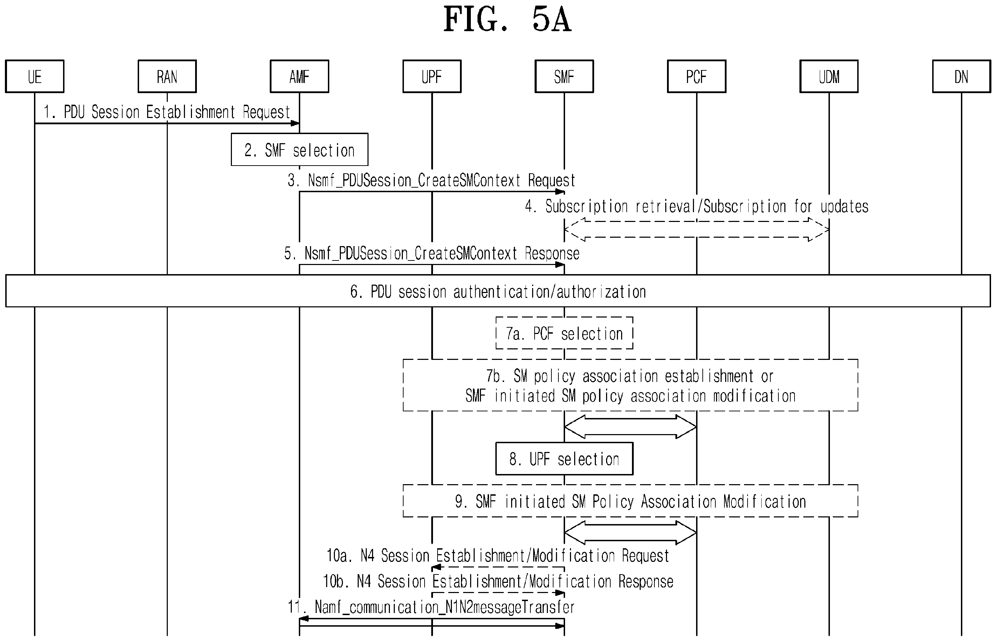

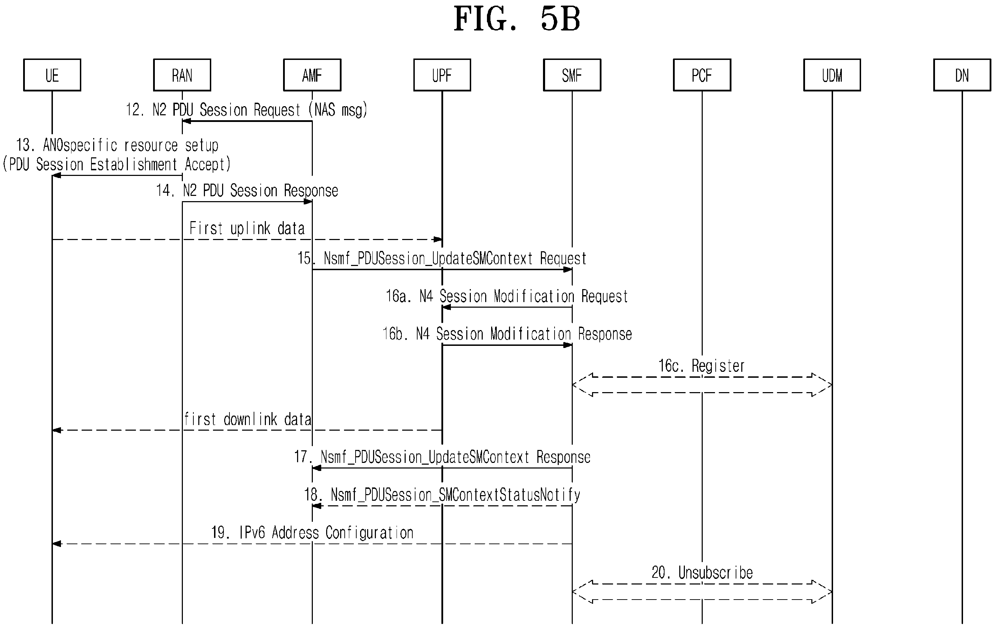

FIGS. 5A and 5B are signal flow diagrams showing exemplary PDU session establishment procedures.

The procedures shown in FIGS. 5A and 5B assumes that the UE has been already registered on an access and mobility management function (AMF) according to a registration procedure. Accordingly, it is assumed that the AMF has already acquired user subscription data from unified data management (UDM).
1) The UE transmits a non-access stratum (NAS) message to the AMF. The message may include single network slice selection assistance information (S-NSSAI), data network name (DNN), PDU session ID, request type, N1 session management (SM) information, etc.

Specifically, the UE includes the S-NSSAI from the allowed NSSAI of the current access type. When information on the mapped NSSAI is provided to the UE, the UE may provide both the S-NSSAI based on the allowed NSSAI and the corresponding S-NSSAI based on the information of the mapped NSSAI. Here, the information on the mapped NSSAI is information in which each S-NSSAI of the allowed NSSAI is mapped to the S-NSSAI of the NSSAI configured for a home public land mobile network (HPLMN).

More specifically, the UE may extract and store information on the allowed S-NSSAI and the mapped S-NSSAI included in a registration acceptance message received from the network (i.e., the AMF) during the registration procedure. Accordingly, the UE may include both the S-NSSAI based on the allowed NSSAI and the corresponding S-NSSAI based on the information on the mapped NSSAI in the PDU session establishment request message and transmit them.

To establish a new PDU session, the UE may generate a new PDU session ID.

The UE may initiate the PDU session establishment procedure initiated by the UE by transmitting a NAS message that includes the PDU session establishment request message within the N1 SM information. The above PDU session establishment request message may include a request type, a session and service continuity (SSC) mode, and protocol configuration options.

When the PDU session establishment is intended to establish a new PDU session, the request type indicates "initial request." However, when an existing PDU session is present between 3GPP access and non-3GPP access, the request type may indicate "existing PDU session."

The NAS message transmitted by the UE is encapsulated within an N2 message by an access network (AN). The N2 message is transmitted to the AMF and may include user location information and access technology type information.
- The N1 SM information may include an SM PDU data network (DN) request container including information on PDU session authentication by an external DN.

2) The AMF may determine that the message corresponds to a request for a new PDU session when the request type indicates "initial request" and the PDU session ID has not been used for the existing PDU session of the UE.

When the NAS message does not include an S-NSSAI, the AMF may determine a default configured S-NSSAI for the requested PDU session based on the UE subscription. The AMF may store the PDU session ID in association with the ID of a session management function (SMF).

The AMF may select an SMF.

3) The AMF may transmit an Nsmf_PDUSession_CreateSMContext request message or an Nsmf_PDUSession_UpdateSMContext request message to the selected SMF.

The Nsmf_PDUSession_CreateSMContext request message may include subscription permanent identifier (SUPI), DNN, S-NSSAI(s), PDU session ID, AMF ID, request type, policy control function (PCF) ID, priority access, N1 SM container, user location information, an access type, permanent equipment identifier (PEI), generic public subscription identifier (GPSI), UE presence in LADN service area, subscription for PDU session status notification, DNN selection mode, and trace requirements. The SM container may include a PDU session establishment request message.

The Nsmf_PDUSession_UpdateSMContext request message may include SUPI, DNN, S-NSSAI(s), SM context ID, AMF ID, request type, N1 SM container, user location information, access type, RAT type, and PEI. The N1 SM container may include a PDU session establishment request message.

The AMF ID is used to identify the AMF servicing the UE. The N1 SM information may include the PDU session establishment request message received from the UE.

4) The SMF transmits a subscriber data request message to the UDM. The subscriber data request message may include a subscriber permanent ID and a DNN. The UDM may transmit a subscriber data response message to the SMF.

In step 3), when the request type indicates an "existing PDU session," the SMF determines that the request is due to a handover between 3GPP access and non-3GPP access. The SMF may identify an existing PDU session based on the PDU session ID.

When the SMF has not yet retrieved SM-related subscription data for a UE associated with a DNN, the SMF may request the subscription data.

The subscription data may include information on an authenticated request type, an authenticated SSC mode, and a default QoS profile.

The SMF may determine whether the UE request complies with user subscription and local policies. Alternatively, the SMF rejects the UE request through NAS SM signaling (including a relevant SM rejection cause) transmitted by the AMF, and the SMF informs the AMF that the PDU session ID needs to be considered released.

5) The SMF transmits the Nsmf_PDUSession_CreateSMContext Response message or the Nsmf_PDUSession_UpdateSMContext Response message to the AMF.

The Nsmf_PDUSession_CreateSMContext Response message may include a cause, an SM context ID, or an N1 SM container. The N1 SM container may include a PDU session reject.

In step 3), when the SMF receives the Nsmf_PDUSession_CreateSMContext request message and the SMF may handle a PDU session establishment request message, the SMF generates the SM context and transmits the SM context ID to the AMF.

6) Secondary authentication/authorization is performed optionally.

7a) When dynamic policy and charging control (PCC) is used for the PDU session, the SMF selects the PCF.

7b) The SMF performs an SM policy association establishment procedure to establish an SM policy association with the PCF.

8) When the request type in step 3) indicates "initial request," the SMF selects an SSC mode for the PDU session. When step 5) is not performed, the SMF may also select a UPF. For request types IPv4 or IPv6, the SMF may assign an IP address/prefix for the PDU session.

9) The SMF performs an SM policy association modification procedure to provide information on conditions of a policy control request trigger.

10) When the request type indicates "initial request," the SMF initiates an N4 session establishment procedure using the selected UPF, and otherwise, the SMF may initiate an N4 session modification procedure using the selected UPF.

10a) The SMF transmits an N4 session establishment/modification request message to the UPF. The SMF may also provide packet detection, enforcement, and reporting rules to be installed in the UPF for the PDU session. When core network (CN) tunnel information is assigned to the SMF, the CN tunnel information may be provided to the UPF.

10b) The UPF may respond by transmitting an N4 session establishment/modification response message. When the CN tunnel information is assigned by the UPF, the CN tunnel information may be provided to the SMF.

11) The SMF transmits a Namf_Communication_N1N2MessageTransfer message to the AMF. The Namf_Communication_N1N2MessageTransfer message may include a PDU session ID, N2 SM information, and an N1 SM container.

The N2 SM information may include a PDU session ID, a QoS flow ID (QFI), QoS profile(s), CN tunnel information, an S-NSSAI from the allowed NSSAI, session aggregate maximum bit rate (Session-AMBR), a PDU session type, user plane security enforcement information, and a UE integrity protection maximum data rate.

The N1 SM container may include a PDU session establishment acceptance message.

The PDU session establishment acceptance message may include authorized QoS rules, an SSC mode, an S-NSSAI, and an assigned IPv4 address.

12) The AMF transmits an N2 PDU session request message to the RAN. The message may include N2 SM information and a NAS message. The NAS message may include a PDU session ID and a PDU session establishment acceptance message.

The AMF may transmit a NAS message including the PDU session ID and the PDU session establishment acceptance message. In addition, the AMF includes the N2 SM information received from the SMF within the N2 PDU session request message and transmits the N2 PDU session request message to the RAN.

13) The RAN may perform specific signaling exchanges with the UE related to the information received from the SMF.

The RAN also assigns RAN N3 tunnel information for the PDU session.

The RAN transmits the NAS message provided in step 10) to the UE. The NAS message may include a PDU session ID and N1 SM information. The N1 SM information may include a PDU session establishment acceptance message.

The RAN transmits the NAS message to the UE only when the necessary RAN resources are established and the assignment of RAN tunnel information is successful.

14) The RAN transmits an N2 PDU session response message to the AMF. The message may include a PDU session ID, a cause, and N2 SM information. The N2 SM information may include a PDU session ID, (AN) tunnel information, and a list of allowed/rejected QoS profiles.
- The RAN tunnel information may correspond to an access network address of an N3 tunnel corresponding to the PDU session.

15) The AMF may transmit an Nsmf_PDUSession_UpdateSMContext request message to the SMF. The Nsmf_PDUSession_UpdateSMContext request message may include N2 SM information. Here, the AMF may transmit the N2 SM information received from the RAN to the SMF.

16a) When an N4 session for the PDU session has not already been established, the SMF may initiate an N4 session establishment procedure together with the UPF. Otherwise, the SMF may initiate the N4 session modification procedure using the UPF. The SMF may provide AN tunnel information and CN tunnel information. The CN tunnel information may be provided only when the SMF selects the CN tunnel information in step 8).

16b) The UPF may transmit an N4 session modification response message to the SMF.

17) The SMF transmits an Nsmf_PDUSession_UpdateSMContext Response message to the AMF.

When this process is completed, the AMF may transmit the relevant event to the SMF.

18) The SMF transmits an Nsmf_PDUSession_SMContextStatusNotify message.

19) The SMF transmits information to the UE through the UPF. Specifically, in the case of PDU Type IPv6, the SMF may generate an IPv6 router advertisement and transmit the IPv6 router advertisement to the UE through the N4 and the UPF.

20) When the PDU session establishment is unsuccessful during the procedure, the SMF notifies the AMF.

### <PDU session modification procedure>

There may be two types of PDU session establishment procedures as follows.
- A PDU session establishment procedure initiated by a UE
- A PDU session establishment procedure initiated by a network To this end, the network may transmit a device trigger message to the UE's application(s).

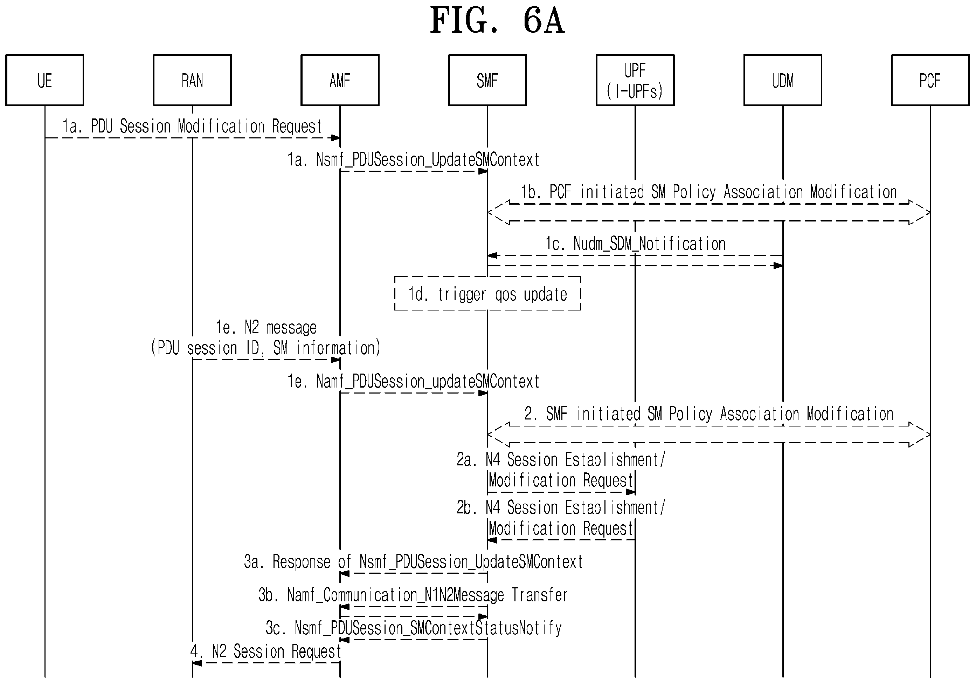

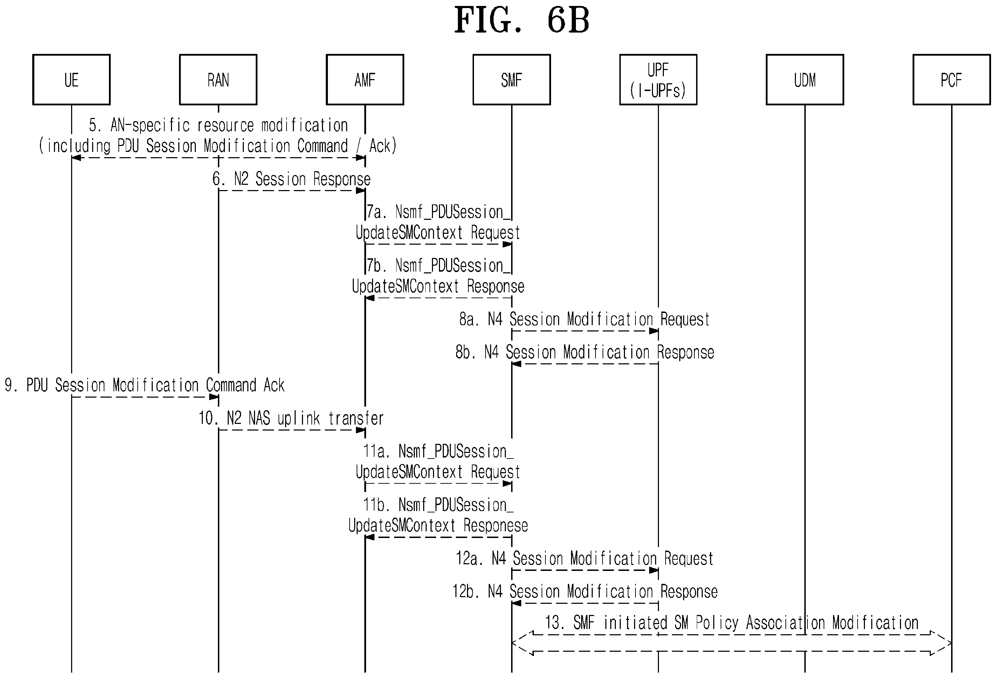

FIGS. 6A and 6B are signal flow diagrams showing exemplary PDU session modification procedures.

The PDU session may be established/managed based on the PDU session modification procedure.

The PDU session modification procedure may be initiated by the UE or by the network.

1a) When initiated by the UE, the UE may initiate the PDU session modification procedure by transmitting a NAS message. The NAS message may include an N1 SM container. The N1 SM container may include a PDU session modification request message, a PDU session ID, and information on the integrity protection maximum data rate of the UE. The PDU session modification request message may include a PDU session ID, packet filters, information on the requested QoS, 5G session management (5GSM) core network capability, and the number of packet filters. The integrity protection maximum data rate of the UE indicates the maximum data rate at which the UE may support UP integrity protection. The number of packet filters indicates the number of packet filters supported for QoS rules.

The NAS message is transmitted to an appropriate AMF through the RAN based on the location information of the UE. Then, the AMF transmits the Nsmf_PDUSession_UpdateSMContext message to the SMF. The message may include an SM context ID and an N1 SM container. The N1 SM container may include a PDU session modification request message.

1b) When initiated by a PCF among network nodes, the PCF may notify the SMF of a policy change by initiating an SM policy association modification procedure.

1c) When initiated by a UDM among network nodes, the UDM may update subscriber data of the SMF by transmitting a Nudm_SDM_Notification message. The SMF may update the session management subscriber data and transmit an ACK message to the UDM.

1d) When initiated by the SMF among network nodes, the SMF may trigger a QoS update.

When triggered according to steps 1a) to 1d), the SMF may perform a PDU session modification procedure.

1e) When initiated by an AN among network nodes, the AN may notify the SMF when the AN resource to which the QoS flow is mapped is released. The AN may transmit an N2 message to the AMF. The N2 message may include a PDU session ID and N2 SM information. The N2 SM information may include a QoS flow ID (QFI), user location information, and an indication that the QoS flow has been released. The AMF may transmit the Nsmf_PDUSession_UpdateSMContext message. The message may include an SM context ID and N2 SM information.

2) The SMF may transmit a report on a subscription event by performing the SM policy association modification procedure. When the PDU session modification procedure is triggered by step 1b) or 1d), this step may be skipped. When a dynamic PCC is not configured on the network, the SMF may apply an internal policy to determine changes to the QoS profile.

Steps 3 to 7 to be described below may not be performed when the PDU session modification requires only the operation of the UPF.

3a) When initiated by the UE or the AN, the SMF may respond to the AMF by transmitting the Nsmf_PDUSession_UpdateSMContext message. The message may include N2 SM information and an N2 SM container. The N2 SM information may include a PDU session ID, QFI, QoS profile, and session-AMBR. The N1 SM container may include a PDU session modification command. The PDU session modification command may include a PDU session ID, QoS rules, QoS rule actions, QoS flow-level QoS parameters, and session-AMBR.

The N2 SM information may include information that the AMF needs to transmit to the AN. The N2 SM information may include a QFI and a QoS profile to notify the AN that one or more QoS flows have been added or modified. When the PDU session modification is requested by the UE for which no user plane resource has been established, the above N2 SM information to be transmitted to the AN may include information on the establishment of the user plane resource.

The N1 SM container may include a PDU session modification command that the AMF transmits to the UE. The PDU session modification command may include QoS rules and QoS flow-level QoS parameters.

3b) When initiated by an SMF, the SMF may transmit a Namf_Communication_N1N2MessageTransfer message. The message may include N2 SM information and an N1 SM container. The N2 SM information may include a PDU session ID, QFI, QoS profile, and session-AMBR. The N1 SM container may include a PDU session modification command. The PDU session modification command may include a PDU session ID, QoS rules, and QoS flow-level QoS parameters.

When the UE is in a CM-IDLE state and asynchronous type communication (ATC) is activated, the AMF may update and store the UE context based on the Namf_Communication_N1N2MessageTransfer message, and steps 3) to 7) to be described below may be skipped. When the UE enters a reachable state, that is, when the UE enters a CM-CONNECTED state, the AMF may transmit an N1 message to synchronize the UE and the UE context.

4) The AMF may transmit an N2 PDU session request message to the AN. The N2 PDU session request message may include N2 SM information received from the SMF and a NAS message. The NAS message may include a PDU session ID and an N1 SM container. The N1 SM container may include a PDU session modification command.

5) The AN performs AN signaling exchanges with the UE associated with the information received from the SMF. For example, in the case of NG-RAN, a UE and RRC connection reconfiguration procedure may be performed to modify the necessary AN resources associated with the PDU session.

6) The AN transmits an N2 PDU session ACK message in response to the received N2 PDU session request. The N2 PDU session ACK message may include N2 SM information and user location information. The N2 SM information may include a list of accepted/rejected QFIs, AN tunnel information, and a PDU session ID, etc.

7) The AMF transmits the N2 SM information and user location information received from the AN to the SMF through the Nsmf_PDUSession_UpdateSMContext message. Then, the SMF transmits the Nsmf_PDUSession_UpdateSMContext message to the AMF.

8) The SMF transmits an N4 session update request message to the UPF to update the UPF's N4 session included in the PDU session update.

When a new QoS flow is generated, the SMF updates the UL packet detection rules of the new QoS flow together with the UPF.

9) The UE transmits a NAS message in response to the receipt of the PDU session modification command. The NAS message may include a PDU session ID and an N1 SM container. The N1 SM container may include a PDU session modification command ACK.

10) The AN transmits the NAS message to the AMF.

11) The AMF may transmit the N1 SM container and user location information received from the AN to the SMF through the Nsmf_PDUSession_UpdateSMContext message. The N1 SM container may include a PDU session modification command ACK. The SMF may transmit the Nsmf_PDUSession_UpdateSMContext response message to the AMF.

12) The SMF transmits an N4 session modification request message to the UPF to update the UPF's N4 session included in the PDU session modification. The message may include an N4 session ID.

13) When the SMF interacts with the PCF in step 1b) or 2), the SMF may notify the PCF whether a PCC decision may be performed through the SM policy association modification procedure.

The SMF may notify the entity that requests user location information associated with the PDU session change.

### A. Coordination between 5GSM and EPS session management (ESM) using an N26 interface

a) The PDU session type of the PDU session is mapped to the PDN type of a default evolved packet system (EPS) bearer as follows.
   a-1) When the PDU session type is "Unstructured," the PDN type is set to "non-IP."
   a-2) When the PDU session type is "IPv4," the PDN type is set to "IPv4."
   a-3) When the PDU session type is "IPv6," the PDN type is set to "IPv6."
   a-4) When the PDU session type is "IPv4v6," the PDN type is set to "IPv4v6."
   a-5) When the PDU session type is "Ethernet" and any one of the UE or the network does not support the Ethernet PDN type in S1 mode, or when neither the UE nor the network supports the Ethernet PDN type in S1 mode, the PDN type is set to "non-IP."
   a-6) When the PDU session type is "Ethernet" and both the UE and the network support the Ethernet PDN type in S1 mode, the PDN type is set to "Ethernet."
b) The PDU address of the PDU session is mapped to the PDN address of the default EPS bearer as follows.
   b-1) When the PDU session type is "IPv4," "IPv6," or "IPv4v6," the PDN address of the default EPS bearer context is set to the PDU address of the PDU session.
   b-2) When the PDU session type is "Ethernet" or "Unstructured," the PDN address of the default EPS bearer context is set to 0 (zero).

### B. PDU session type

The following PDU session types may be supported.
IPv4;
IPv6;
IPv4v6;
Ethernet (EtherType as defined in IEEE Std 802.3 [31A]); and
Unstructured.

### C. IP address assignment through NAS signaling

When the UE requests an IP connection, the UE may set the PDU session type within the PDU session modification request message as follows, based on its IP stack capability.
a) The UE may
   1) set the PDU session type to IPv4, IPv6, or IPv4v6 depending on the UE's configuration or received policy when both IPv6 and IPv4 are available.
   2) set the PDU session type to IPv6 when only IPv6 is available.
   3) set the PDU session type to IPv4 when only IPv4 is available.
b) When the IP version capability within the UE is unknown (in a case in which mobile termination (MT) and a terminal equipment (TE) are separated and the TE's capability is unknown to the MT), the UE may set the PDU session type to IPv4v6.

When the UE intends to use DHCPv4 for IPv4 address assignment, the UE may inform the network by using an extended protocol configuration options information element (IE) in a PDU session modification request message.

When the PDU session modification request message is transmitted by the UE, the network may consider the PDU session type, a network operator's policy, and the UE's subscription information to assign an IP address.
a) When the network sets the selected PDU session type IE to IPv4, the network may include an IPv4 address in the PDU address IE.
b) When the network sets the selected PDU session type IE to IPv6, the network may include an interface identifier for an IPv6 link-local address in the PDU address IE.
c) When the network sets the selected PDU session type IE to IPv4v6, the network may include an interface identifier for both an IPv4 address and an IPv6 link-local address in the PDU address IE.

### D. PDU session modification procedure requested by a UE

### D-1. Initiation of PDU session modification procedure requested by the UE

To enable the UE to request PDU session modification, the PDU session modification procedure requested by the UE may be used.

To enable the UE to initiate the PDU session modification procedure, the UE generates a PDU session modification request message.

When the UE requests the establishment of a new urgent PDU session, the UE includes the PDU session type IE in the PDU session modification request message with the IP version capability set.

When the UE supports reflective QoS, the UE may set a RQoS bit in the 5GSM capability IE in the PDU session modification request message to "Reflective QoS supported."
a) The UE may request the modification of a new PDU session of the "IPv4," "IPv6," "IPv4v6," or "Ethernet" PDU session type.
b) When the UE requests the transmission of an existing PDN connection within an EPS of the "IPv4," "IPv6," "IPv4v6," or "Ethernet" PDN type, or an existing PDN connection within an EPS of the "Non-IP" PDN type mapped to the "Ethernet" PDU session type to 5GS, or
c) When a request is made to transmit an existing PDN connection within untrusted non-3GPP access connected to an EPC of "IPv4," "IPv6," or "IPv4v6" PDN type to 5GS,
   with respect to the PDU connection established in S1 mode, after an inter-system change from the S1 mode to N1 mode, when the UE operates in single-registration mode in a network supporting an N26 interface, when the UE supports receiving a DNS server address in protocol configuration options, and when the UE has not previously successfully performed a UE-requested PDU session modification procedure to support the same, the UE may include the following in an extended protocol configuration options IE in the PDU session modification request message.
   a) When the PDU session is of the "IPv4" or "IPv4v6" PDU session type, the UE may include a request for the DNS server IPv4 address.
   b) When the PDU session is of the "IPv6" or "IPv4v6" PDU session type, the UE may include a request for the DNS server IPv6 address.

### D-2. When the PDU session modification procedure requested by the UE is accepted by the network

When the PDU session modification procedure requested by the UE is accepted by the network, the SMF initiates the PDU session modification procedure requested by the network. To this end, the SMF generates a PDU session modification request message.

The SMF sets the selected PDU session type IE in the PDU session modification request message to the selected PDU session type, that is, the PDU session type of the PDU session.

### D-3. When the PDU session modification procedure requested by the UE is not accepted by the network

When a connection by the requested DN is rejected by the network, the SMF generates a PDU session modification reject message.

To indicate the reason for rejecting the PDU session modification, the SMF may set a 5GSM cause IE in the PDU session modification reject message.

The 5GSM cause IE may represent one of the following SM cause values.
#8: Operator determined barring;
#26 Insufficient resources;
#27 Lost or unknown DNN;
#28 Unknown PDU session type;
#29 Failure of user authentication or authorization
#31 Request rejected (unspecified);
#32 Service option not supported;
#33 Requested service option not subscribed;
#35 Procedure transaction identity (PTI) already in use;
#38 Network failure;
#39 Reactivation requested;
#50 PDU session type IPv4 only allowed;
#51 PDU session type IPv6 only allowed;
#54 Absence of PDU session;
#57: PDU session type IPv4v6 only allowed;
#58: Only untrusted PDU session type allowed
#61: Only Ethernet PDU session type allowed
#67: Insufficient resources for the specific slice and DNN
#68: SSC mode not supported
#69: Insufficient resources for the specific slice

When the PDU session modification request message includes the PDU session type IE set to IPv6 and the subscriber information or the SMF setting, or both the subscriber information and the SMF setting, are restricted to only IPv4 for the requested DNN, the SMF may include the 5GSM cause value#50 "PDU session type IPv4 only allowed" in the 5GSM cause IE in the PDU session modification reject message.

When the PDU session modification request message includes the PDU session type IE set to IPv6 and the subscriber information or the SMF setting, or both the subscriber information and the SMF setting, are restricted so as not to support the "IPv4" PDU session type and the "IPv6" PDU session type for the requested DNN, the SMF may include 5GSM cause value#28 "unknown PDU session type" in the 5GSM cause IE of the PDU session modification reject message.

When the PDU session modification request message includes the PDU session type IE set to "IPv4" and the subscriber information or the SMF setting, or both the subscriber information and the SMF setting, are restricted to allow only IPv6 for the requested DNN, the SMF may include the 5GSM cause value#51 "PDU session type IPv6 only allowed" in the 5GSM cause IE of the PDU session modification reject message.

When the PDU session modification request message includes the PDU session type IE set to "IPv4" and the subscriber information or the SMF setting, or both the subscriber information and the SMF setting, do not support both the "IPv4" session type and the "IPv6" PDU session type for the requested DNN, the SMF may include 5GSM cause value#28 "unknown PDU session type" in the 5GSM cause IE of the PDU session modification reject message.

When the PDU session modification request message includes the PDU session type IE set to "IPv4v6" and the subscriber information or the SMF setting, or both the subscriber information and the SMF setting, do not support the "IPv4v6" PDU session type, the "IPv4" session type, and the "IPv6" PDU session type for the requested DNN, the SMF may include 5GSM cause value#28 "unknown PDU session type" in the 5GSM cause IE of the PDU session modification reject message.

When the PDU session modification request message includes the PDU session type IE set to "Unstructured" or "Ethernet" and the subscriber information or the SMF setting, or both the subscriber information and the SMF setting, do not support the PDU session type for the requested DNN, the SMF may include the 5GSM cause value#28 "unknown PDU session type" in the 5GSM cause IE of the PDU session modification reject message.

When the PDU session modification request message is intended to establish an MA PDU session, when the PDU session modification request message includes the PDU session type IE set to "Unstructured," and when the SMF setting does not support the PDU session type, the SMF may include the 5GSM cause value#28 "unknown PDU session type" in the 5GSM cause IE of the PDU session modification reject message.

The network may include a back-off timer value IE in the PDU session modification reject message.

When the 5GSM cause value is#50 "PDU session type IPv4 only allowed,"#51 "PDU session type IPv6 only allowed,"#57 "PDU session type IPv4v6 only allowed,"#58 "PDU session type unstructured only allowed," or#61 "PDU session type Ethernet only allowed," the network may include a Re-attempt indicator without a back-off timer value to indicate whether the UE is allowed to attempt the PDU session modification procedure within an equivalent PLMN in N1 mode using the same PDU session type for the same DNN and the same S-NSSAI.

The SMF may transmit the PDU session modification reject message.

When the UE receives the PDU session modification reject message and the PDU session ID through the NAS transmission procedure, the UE may stop timer T3580, release the assigned PTI value, and consider that the PDU session has not been established.

When the 5GSM cause value is#28 "unknown PDU session type" and the PDU session modification request message includes a PDU session IE indicating the PDU session type, the UE may ignore the back-off timer value IE and the Re-attempt indicator provided by the network. The UE may transmit another PDU session modification request message to establish a new PDU session using a PDU session type IE indicating a different PDU session type.

When the 5GSM cause value is#50 "PDU session type IPv4 only allowed,"#51 "PDU session type IPv6 only allowed,"#57 "PDU session type IPv4v6 only allowed,"#58 "PDU session type unstructured only allowed," or#61 "PDU session type Ethernet only allowed," the UE may ignore the back-off timer value IE provided by the network. The UE may evaluate available USRP rules. The UE may not immediately transmit a different PDU session modification request message for the same DNN and the same HPLMN S-NSSAI to acquire a PDU session type different from that allowed by the network until one of the following conditions is satisfied.
a) When the UE is registered in a new PLMN that is not present in the list of equivalent PLMNs at the time the PDU session modification reject message is received
b) When the UE is registered in a new PLMN that is present in the list of equivalent PLMNs at the time the PDU session modification reject message is received, when the network does not include the Re-attempt indicator in the PDU session modification reject message, or when the network does not include a Re-attempt indicator in the message indicating that a retry is allowed in the equivalent PLMN,
c) When the UE is turned off, or
d) When a USIM is removed, or when the UE does not support access to an SNPN and the entry in the "List of subscriber data" for a current SNPN is updated, or when the UE supports access to the SNPN but the entry in the "List of subscriber data" is updated

For 5GSM cause values#50 "PDU session type IPv4 only allowed,"#51 "PDU session type IPv6 only allowed,"#57 "PDU session type IPv4v6 only allowed,"#58 "PDU session type unstructured only allowed," and#61 "PDU session type Ethernet only allowed," the UE may ignore a value of a radio access technology change (RATC) bit in the Re-attempt indicator IE provided by the network.

### <Network slicing>

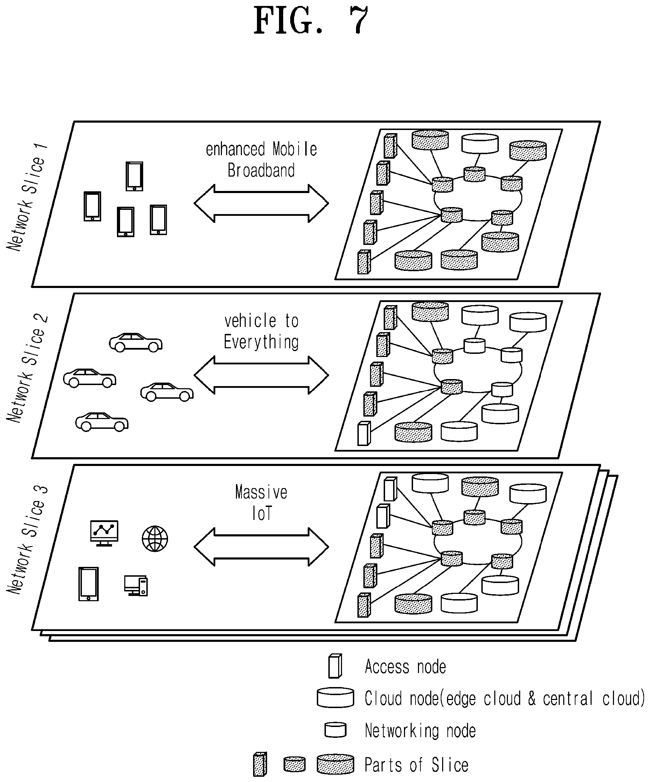

FIG. 7 is an exemplary view for describing the concept of network slicing.

The network slicing refers to the division of a single physical network into multiple virtual networks. Each divided network may be operated in a customized and optimized manner for specific application services or subscriber types. Based on cloud computing and virtualization technologies, shared physical network resources may be dynamically and effectively scheduled to logical network slices to meet changing user requirements.

A 5G network slice consists of a collection of network functions and configurations for specific use cases or business models. Referring to FIG. 5, an example of the 5G network slicing in which Network Slice 1 employs an enhanced mobile broadband (eMBB), Network Slice 2 employs vehicle to everything (V2X), and Network Slice 3 employs a massive IoT (MioT) is shown.

A single network slice may span multiple domains, including radio access networks operating on distributed cloud infrastructure and transport networks, and core networks. The fundamental principle of 5G network slice design is to provide only the customized functions necessary to handle traffic for specific use cases. The network slices have the ability to adapt to changing requirements together with the necessary customized capabilities.

Meanwhile, according to the definition of next generation mobile networks (NGMN), network slicing consists of three layers: a service instance layer, a network slice instance layer, and a resource layer. The service instance layer represents end-user services, each service represented by a service instance. The network slice service instance layer includes the provided network slice instances, and as network slice instances, the network slice service instance layer provides network characteristics required for service instances. The resource layer provides all virtual or physical resources and network functions necessary to generate network slice instances.

In 3GPP 5G mobile networks currently being developed by the Internet Engineering Task Force (IETF) Deterministic Networking (DetNet) Working Group, network slicing operates based on a CN, but fundamentally operates based on network slice instance information. The network slice instance refers to information on a set of the resources and network function instances required to form a network slice. A single network slice may be used across the entire public land mobile network (PLMN) or across one or more tracking areas (TAs). A single network slice instance may be associated with one or more of S-NSSAIs, and conversely, a single S-NSSAI may be associated with one or more network slice instances.

In 3GPP 5G mobile networks, a single network slice is identified by a single S-NSSAI. The S-NSSAI consists of a slice/service type (SST) and a slice differentiator SD, and the SST needs to be included in the S-NSSAI, but the SD may be included optionally or omitted. Currently, as shown in Table 2, a total of six SST types and values are defined as standards in 3GPP technical specifications.

**[Table 2]**

| Slice/Service Type | SST value |
|---|---|
| eMBB | 1 |
| Ultra-reliable low latency communications (URLLC) | 2 |
| MIoT | 3 |
| V2X | 4 |
| HMTC*(High-performance Machine-Type Communications) (*since Rel-17 onwards) | 5 |
| HDLLC**(High Data rate and Low Latency Communications) (**since Rel-18 onwards) | 6 |

Meanwhile, a set of one or more S-NSSAIs is referred to as NSSAI. During a registration procedure of a 5G mobile communication network, the terminal requests a network slice connection of the CN using the NSSAI, and the CN is responsible for authentication and authorization of such a network slice connection request of the terminal. The terminal may be configured with or may store various types of NSSAI provided from the 5G core network. The configured NSSAI is NSSAI configured by receiving the NSSAI from the serving PLMN, default configured NSSAI is NSSAI configured by receiving NSSAI from a home PLMN, and requested NSSAI is NSSAI used when a terminal requests a connection to a specific network slice from the CN. The allowed NSSAI is NSSAI indicating that the CN allows the terminal to connect to a specific network slice. In addition, subscribed S-NSSAI refers to S-NSSAI included in the subscriber information. The default configured NSSAI of the terminal may be configured by being preconfigured and stored, provided by the CN, or updated. Each S-NSSAI in the default configured NSSAI corresponds to S-NSSAI in the subscriber NSSAI. The S-NSSAI in the requested NSSAI of the terminal refers to S-NSSAI in an NSSAI that was preconfigured or allowed by the network. Ultimately, the NSSAI or S-NSSAI generally used by the terminal refers to the NSSAI or S-NSSAI preconfigured or allowed by the network.

Meanwhile, the terminal and the 5G mobile network basically receive or use NSSAI during the registration process to support and manage network slice connections. First, the terminal generally has configured NSSAI preconfigured and stored, and allowed NSSAI preallowed by the network for use. When there is no NSSAI preallowed by the network, there may be no allowed NSSAI. In order for the terminal to request a connection to a specific network slice, the terminal transmits a registration request message including requested NSSAI to the network during the registration procedure. In this case, the requested NSSAI refers to use of the default configured NSSAI when no configured NSSAI or allowed NSSAI is stored in the terminal, that is, when no NSSAI is available for use. When the allowed NSSAI is not stored and available configured NSSAI is stored, the configured NSSAI is used as the requested NSSAI. Finally, when available allowed NSSAI is stored, the allowed NSSAI is used as the requested NSSAI. After checking the requested NSSAI included in the registration request message transmitted by the terminal, the CN responds to the terminal by including configured NSSAI, allowed NSSAI, and rejected NSSAI in a registration accept message. The terminal stores the configured NSSAI, allowed NSSAI, and rejected NSSAI provided through the registration accept message transmitted from the network and uses the above NSSAIs when requesting a network slice connection thereafter. However, since the rejected NSSAI is NSSAI that the network has rejected, the terminal does not use the rejected NSSAI in principle. Through the registration request procedure, the terminal and the network mutually provide NSSAI for supporting and managing network slice connections, thereby managing configuration.

When the terminal transmits a PDU session establishment request message to the network for data transmission, the terminal includes, from the stored allowed NSSAI, S-NSSAI corresponding to a network slice to which an application related to the data transmission intends to connect, and transmits the message to the network, and the network checks the S-NSSAI included in the PDU session establishment request message transmitted by the terminal and, when no issue is found, the network responds with an acceptance.

In addition, when network slicing-related information including the NSSAI is changed due to changes in subscriber information or mobile network policies, the network may notify the terminal of the changed NSSAI. In this case, the network may provide the changed NSSAI to the terminal through a generic terminal configuration update procedure, and to this end, the AMF transmits a configuration update command message including the configured NSSAI, the allowed NSSAI, and the rejected NSSAI to the terminal, and the terminal updates and stores the received configured NSSAI, allowed NSSAI, and rejected NSSAI. Subsequently, the terminal performs a network slice connection request using the changed NSSAI.

Meanwhile, in the recent 3GPP Release 18 specification, an alternative S-NSSAI is defined, and when S-NSSAI (e.g., S-NSSAI#1) becomes unavailable or congested, the alternative S-NSSAI refers to S-NSSAI (e.g., S-NSSAI#2) among allowed NSSAI that is compatible with or may substitute for the S-NSSAI (e.g., S-NSSAI#1). When the S-NSSAI (e.g., S-NSSAI#1) becomes unavailable or congested in the network, the compatible or replaceable S-NSSAI, that is, the alternative S-NSSAI, is provided to the terminal for update. In this case, the terminal may be updated by providing the alternative S-NSSAI using the generic UE configuration update procedure.

On the other hand, the 3GPP Release 18 standard defines partially allowed NSSAIs, and the existing allowed NSSAI refers to NSSAI by which a network (AMF and/or SMF) informs that a network slicing service related to NSSAI requested by the terminal in a registration area in which the terminal is registered is allowed. In this case, the allowed NSSAI is applied to PLMNs or all TA lists within the registration area of the terminal. Conversely, the partially allowed NSSAI is applied to PLMNs or some TA lists within the registration area of the terminal. Accordingly, in some TAs in the registered area, a network slicing service associated with the partially allowed NSSAI (e.g., partially allowed NSSAI#1-actually a specific S-NSSAI#1) is allowed, whereas in other TAs, the network slicing service associated with the partially allowed NSSAI (e.g., partially allowed NSSAI#1-actually a specific S-NSSAI#1) is not allowed. Such partially allowed NSSAI is provided and updated through the registration procedure or the generic UE configuration update procedure.

In addition, to support low latency services in 5G systems, an always-on PDU session for rapid data transmission and reception is supported. For the always-on PDU session, the terminal may configure access category information differently for an always-on PDU session to support unified access control from a general PDU session. In addition, when the terminal configures a PDU session for time synchronization or time sensitive communications (TSC) to support low latency services in 5G systems, the terminal configures the PDU session as an always-on PDU sessions and manages the PDU session. When an application of the terminal receiving low latency services requests a PDU session establishment to a network in order to transmit and receive data, the terminal transmits, to the network, a PDU session establishment request NAS message including "always-on PDU session requested" information indicating an always-on PDU session request. A network supporting the always-on PDU session responds by transmitting, to the terminal, a PDU session establishment accept NAS message including "always-on PDU session required" information indicating establishment of the always-on PDU session. Subsequently, the terminal and the network maintain and manages the user-plane resource and context information of the corresponding PDU session until the terminal switches to idle mode or the configured PDU session is released. In addition, the always-on PDU session modification request is identically applied to the PDU session modification request. Meanwhile, the network may reject the always-on PDU session establishment request of the terminal when the terminal does not support the always-on PDU session establishment request. When the application of the terminal requests a PDU session establishment to the network in order to transmit and receive data, in a case in which the terminal transmits, to the network, a PDU session establishment request NAS message including "always-on PDU session requested" information indicating an always-on PDU session request, a network that does not support the always-on PDU session responds by transmitting, to the terminal, a PDU session establishment accept NAS message including "always-on PDU session not allowed" information indicating that the always-on PDU session is not allowed.

### <PDU session handling using changed NSSAI>

The timing of the network's execution of the generic UE configuration update procedure when the network slicing information is changed as described above is not clearly defined in current 3GPP standard specifications. In particular, when partially allowed NSSAI is generated or modified in a 3GPP network according to operator policies or network configuration, a corresponding partially allowed NSSAI is provided to the terminal and updated. These updates are performed through the registration procedure or the generic UE configuration update procedure. However, since the timing of the generic UE configuration update procedure performed by the network is not clearly defined in the 3GPP technical specifications, the following problematic scenarios may occur.
1) Both the terminal and the network are configured to support partially allowed NSSAI, and a network slice area of service (NoS) based on this is deployed.
2) When both the terminal and the network are configured to support partially allowed NSSAI, the partially allowed NSSAI within the network is modified.
3) Since the terminal has not yet been updated with the changed information, it is unaware of the changed information and moves to a TA/cell in which the (newly changed) NoS is not supported, and performs PDU session establishment/modification. (Mismatch in partially allowed NSSAI occurs between the terminal and the network.)
4) Although the partially allowed NSSAI has been changed, the network does not have a clear handling method described in 3GPP regarding how to respond to a request by the terminal to move to a TA/cell area in which the (newly changed) NoS is not supported and perform PDU session establishment/modification while the terminal is unaware of this change.

In particular, the always-on PDU session is a critical PDU session that needs to remain active until the session is released once configured, in order to provide URLLC services such as TSC and TSN. The 3GPP technical specifications do not clearly define how to handle an always-on PDU session in the above-described technical situations.

Accordingly, before the terminal is updated with the changed partially allowed NSSAI provided by the network, when the terminal performs a PDU session establishment request procedure and/or a PDU session modification request procedure associated with the always-on PDU session based on a previously problematic NSSAI (i.e., a set of S-NSSAIs associated with an area that does not support a NoS), there is no handling mechanism specified in the current specifications of 3GPP.

When the network rejects the PDU session establishment request procedure and/or the PDU session modification request procedure of the terminal, due to the characteristics of the always-on PDU session, URLLC-related services may not be provided, and according to the current behavior defined in the 3GPP specifications, the terminal cannot determine whether the rejection is due to the network not supporting the always-on PDU session or due to an issue with the partially allowed NSSAI information, and thus, the terminal may repeatedly and inefficiently attempt to perform the PDU session establishment request procedure and/or the PDU session modification request procedure toward the network.

In summary, when the terminal performs the PDU session establishment request procedure and/or the PDU session modification request procedure associated with the always-on PDU session before the accurate update (synchronization) procedure of the partially allowed NSSAI between the terminal and the network is completed, problems such as URLLC service connectivity degradation due to inefficient operation, increased signaling overhead, and resource wastage may occur, and thus, the present specification proposes an efficient and clear handling solution for the above issue.

### First disclosure

1) A partially allowed NSSAI and NoS in the network have been newly changed. The network (AMF and/or SMF) receives the newly changed/updated partially allowed NSSAIs (e.g., partially allowed NSSAI#2 (i.e., S-NSSAI#2 and partial tracking area identity list#2 information)) and NS-AoS (e.g., NS-AoS#3 (i.e., S-NSSAI#3 and NS-AoS#3 information)) from the NSSF accordingly.
2) The terminal transmits, to the network, a PDU session establishment request message associated with the always-on PDU session based on the partially allowed NSSAI (e.g., partially allowed NSSAI#1) in a case in which the terminal has not yet received partially allowed NSSAI (and/or NS-AoS) from the network, that is, without being aware of an unavailable or changed partially allowed NSSAI (e.g., partially allowed NSSAI#1 (i.e., S-NSSAI#1 and partial tracking area identity list#1 information)). In this case, the terminal transmits, to the network, the PDU session establishment request message including the "always-on PDU session requested" information.
3) The network recognizes that the PDU session establishment request transmitted by the terminal is a PDU session establishment request associated with an unavailable or changed partially allowed NSSAI (e.g., partially allowed NSSAI#1 (i.e., S-NSSAI#1 and partial tracking area identity list#1 information)), and execution is not possible, and thus, the network responds to the terminal with a PDU session establishment reject message. In this case, the PDU session establishment reject message including information such as "BO timer with partially allowed NSSAI#1 and/or (new/updated) partially allowed NSSAI (e.g., partially allowed NSSAI#2 (i.e., S-NSSAI#2 and partial tracking area identity list#2 information)) and/or 5GSM cause value (new#wx "partial NSSAI is not allowed" or "network slice area of service is not allowed") may be transmitted.
4) The terminal that has received the PDU session establishment reject message from the network activates the corresponding BO timer when receiving "BO timer with partially allowed NSSAI#1 (i.e., S-NSSAI#1 and partial tracking area identity list#1 information). In this case, the terminal does not perform a PDU session establishment request based on the partially allowed NSSAI#1 (i.e., S-NSSAI#1 and partial tracking area identity list#1 information) until the BO timer expires. When (new/updated) partially allowed NSSAI (e.g., partially allowed NSSAI#2 (i.e., S-NSSAI#2 and partial tracking area identity list#2 information)) is provided, the terminal replaces/updates the existing partially allowed NSSAI#1 with the partially allowed NSSAI#2 (i.e., S-NSSAI#2 and partial tracking area identity list#2 information). Subsequently, the terminal newly performs the PDU session establishment request procedure with the network based on the replaced/updated partially allowed NSSAI#2 (i.e., S-NSSAI#2 and partial tracking area identity list#2 information). In this case, the terminal transmits, to the network, the PDU session establishment request message including "always-on PDU session requested" information in order to establish an always-on PDU session. Finally, the network supporting the always-on PDU session accepts the PDU session establishment request including the "always-on PDU session requested" information based on the partially allowed NSSAI#2 transmitted by the terminal, and responds to the terminal with a PDU session establishment accept message including the "always-on PDU session required" indication. Accordingly, a service based on the always-on PDU session is provided.

### Second disclosure

1) A partially allowed NSSAI and NoS in the network have been newly changed. The network (AMF and/or SMF) receives the newly changed/updated partially allowed NSSAIs (e.g., partially allowed NSSAI#2 (i.e., S-NSSAI#2 and partial tracking area identity list#2 information)) and NS-AoS (e.g., NS-AoS#3 (i.e., S-NSSAI#3 and NS-AoS#3 information)) from the NSSF accordingly.
2) The terminal, in a case in which it has not yet received the partially allowed NSSAI (and/or NS-AoS) from the network, that is, without recognizing an unavailable or changed partially allowed NSSAI (e.g., partially allowed NSSAI#1 (i.e., S-NSSAI#1 and partial tracking area identity list#1 information)), transmits, to the network, a PDU session establishment request message associated with the partially allowed NSSAI (e.g., partially allowed NSSAI#1). In this case, the terminal transmits, to the network, the PDU session establishment request message including the ,"always-on PDU session requested" information.
3) The network recognizes that the PDU session establishment request transmitted by the terminal is a PDU session establishment request associated with an unavailable or changed partially allowed NSSAI (e.g., partially allowed NSSAI#1 (i.e., S-NSSAI#1 and partial tracking area identity list#1 information)), and execution is not possible, and thus, the network responds to the terminal with a PDU session establishment reject message. In this case, the PDU session establishment reject message including information on a "BO timer with partially allowed NSSAI#1 and/or 5GSM cause value (new#wx "partial NSSAI is not allowed" or "network slice area of service is not allowed")" may be transmitted.
4) The network already has the newly changed/updated partially allowed NSSAI (e.g., partially allowed NSSAI#2 (i.e., S-NSSAI#2 and partial tracking area identity list#2 information)) and NS-AoS (e.g., NS-AoS#3 (i.e., S-NSSAI#3 and NS-AoS#3 information)), and, as described above in 3), recognizes that the PDU session establishment request transmitted by the terminal is associated with an unavailable or changed partially allowed NSSAI (e.g., partially allowed NSSAI#1 (i.e., S-NSSAI#1 and partial tracking area identity list#1 information)), and thus, the network may determine that the terminal attempts to perform the PDU session establishment request procedure based on incorrect information (e.g., partially allowed NSSAI#1). Accordingly, after transmitting the PDU session establishment reject message to the terminal as described above in 3), the network immediately transmits a configuration update command (i.e., a generic UE configuration update procedure) message to the terminal. In this case, the network transmits the newly changed/updated partially allowed NSSAI (e.g., partially allowed NSSAI#2 (i.e., S-NSSAI#2 and partial tracking area identity list#2 information)).
5) The terminal that has received the PDU session establishment reject message from the network activates the corresponding BO timer when receiving "BO timer with partially allowed NSSAI#1 (i.e., S-NSSAI#1 and partial tracking area identity list#1 information). In this case, the terminal does not perform a PDU session establishment request based on the partially allowed NSSAI#1 (i.e., S-NSSAI#1 and partial tracking area identity list#1 information) until the BO timer expires. Upon receiving the configuration update command (i.e., the generic UE configuration update procedure message) from the network, when the terminal receives a newly changed/updated partially allowed NSSAI (e.g., partially allowed NSSAI#2 (i.e., S-NSSAI#2 and partial tracking area identity list#2 information)), the terminal replaces/updates the existing partially allowed NSSAI#1 with the partially allowed NSSAI#2, and then, the terminal newly performs a PDU session establishment request procedure with the network based on the replaced/updated partially allowed NSSAI#2 (i.e., S-NSSAI#2 and partial tracking area identity list#2 information). In this case, the terminal transmits, to the network, the PDU session establishment request message including "always-on PDU session requested" information in order to establish an always-on PDU session. Finally, the network supporting the always-on PDU session accepts the PDU session establishment request including the "always-on PDU session requested" information based on the partially allowed NSSAI#2 transmitted by the terminal, and responds to the terminal with a PDU session establishment accept message including the "always-on PDU session required" indication. Accordingly, a service based on the always-on PDU session is provided.

### Third disclosure

1) A partially allowed NSSAI and NoS in the network have been newly changed. The network (AMF and/or SMF) receives the newly changed/updated partially allowed NSSAIs (e.g., partially allowed NSSAI#2 (i.e., S-NSSAI#2 and partial tracking area identity list#2 information)) and NS-AoS (e.g., NS-AoS#3 (i.e., S-NSSAI#3 and NS-AoS#3 information)) from the NSSF accordingly. In addition, the terminal configures and holds an always-on PDU session based on the unavailable or changed partially allowed NSSAI (e.g., partially allowed NSSAI#1). (The UE has the existing always-on PDU session associated with partially allowed NSSAI#1)
2) The terminal, in a case in which it has not yet received the partially allowed NSSAI (and/or NS-AoS) from the network, that is, without recognizing an unavailable or changed partially allowed NSSAI (e.g., partially allowed NSSAI#1 (i.e., S-NSSAI#1 and partial tracking area identity list#1 information)), transmits, to the network, a PDU session modification request message associated with the partially allowed NSSAI (e.g., partially allowed NSSAI#1). In this case, the terminal transmits, to the network, the PDU session modification request message including the "always-on PDU session requested" information.
3) The network recognizes that the PDU session modification request transmitted by the terminal is a PDU session modification request related to an unavailable or changed partially allowed NSSAI (e.g., partially allowed NSSAI#1 (i.e., S-NSSAI#1 and partial tracking area identity list#1 information)), and execution is not possible, and thus, the network responds to the terminal with a PDU session modification reject message. In this case, the PDU session modification reject message including information such as "BO timer with partially allowed NSSAI#1 and/or (new/updated) partially allowed NSSAI (e.g., partially allowed NSSAI#2 (i.e., S-NSSAI#2 and partial tracking area identity list#2 information)) and/or 5GSM cause value (new#wx "partial NSSAI is not allowed" or "network slice area of service is not allowed") may be transmitted.
4) The network already has the newly changed/updated partially allowed NSSAI (e.g., partially allowed NSSAI#2 (i.e., S-NSSAI#2 and partial tracking area identity list#2 information)) and NS-AoS (e.g., NS-AoS#3 (i.e., S-NSSAI#3 and NS-AoS#3 information)), and, as described above in 3), recognizes that the PDU session modification request transmitted by the terminal is associated with an unavailable or changed partially allowed NSSAI (e.g., partially allowed NSSAI#1 (i.e., S-NSSAI#1 and partial tracking area identity list#1 information)), and thus, the network may determine that the terminal attempts to perform the PDU session modification request procedure based on incorrect information (e.g., partially allowed NSSAI#1).
5) The terminal that has received the PDU session modification request message from the network activates the corresponding BO timer when receiving "BO timer with partially allowed NSSAI#1 (i.e., S-NSSAI#1 and partial tracking area identity list#1 information). In this case, the terminal does not perform a PDU session establishment request based on the partially allowed NSSAI#1 (i.e., S-NSSAI#1 and partial tracking area identity list#1 information) until the BO timer expires.

Subsequently, when the terminal receives, through the PDU session modification reject message from the network, the newly changed/updated partially allowed NSSAI (e.g., partially allowed NSSAI#2 (i.e., S-NSSAI#2 and partial tracking area identity list#2 information)), the terminal replaces/updates the existing partially allowed NSSAI#1 with the partially allowed NSSAI#2, and then, may newly perform a PDU session establishment request procedure with the network based on the replaced/updated partially allowed NSSAI#2 (i.e., S-NSSAI#2 and partial tracking area identity list#2 information). (Always-on PDU session reactivation with alternative S-NSSAI for always-on PDU session) In this case, the terminal transmits, to the network, a PDU session establishment request message including "PDU session requested" information in order to establish an always-on PDU session. Finally, the network supporting the always-on PDU session accepts the PDU session establishment request including the "always-on PDU session requested" information based on the partially allowed NSSAI#2 transmitted by the terminal, and responds to the terminal with a PDU session establishment accept message including the "always-on PDU session required" indication. Accordingly, a service based on the always-on PDU session is provided.

### Fourth disclosure

1) A partially allowed NSSAI and NoS in the network have been newly changed. The network (AMF and/or SMF) receives the newly changed/updated partially allowed NSSAIs (e.g. partially allowed NSSAI#2 (in practice, S-NSSAI#2 and partial tracking area identity list#2 information)) and NS-AoS (e.g., NS-AoS#3 (in practice, S-NSSAI#3 and NS-AoS#3 information)) from the NSSF accordingly. In addition, the terminal configures and holds an always-on PDU session based on the unavailable or changed partially allowed NSSAI (e.g., partially allowed NSSAI#1). (The UE has the existing always-on PDU session associated with partially allowed NSSAI#1)
2) The terminal, in a case in which it has not yet received the partially allowed NSSAI (and/or NS-AoS) from the network, that is, without recognizing an unavailable or changed partially allowed NSSAI (e.g., partially allowed NSSAI#1 (i.e., S-NSSAI#1 and partial tracking area identity list#1 information)), transmits, to the network, a PDU session modification request message associated with the partially allowed NSSAI (e.g., partially allowed NSSAI#1). In this case, the terminal transmits, to the network, the PDU session modification request message including the "always-on PDU session requested" information.
3) The network recognizes that the PDU session modification request transmitted by the terminal is a PDU session modification request related to an unavailable or changed partially allowed NSSAI (e.g., partially allowed NSSAI#1 (i.e., S-NSSAI#1 and partial tracking area identity list#1 information)), and execution is not possible, and thus, the network responds to the terminal with a PDU session modification reject message. In this case, the PDU session modification reject message including information on a "BO timer with partially allowed NSSAI#1 and/or 5GSM cause value (new#wx "partial NSSAI is not allowed" or "network slice area of service is not allowed")" may be transmitted.
4) The network already has the newly changed/updated partially allowed NSSAI (e.g., partially allowed NSSAI#2 (i.e., S-NSSAI#2 and partial tracking area identity list#2 information)) and NS-AoS (e.g., NS-AoS#3 (i.e., S-NSSAI#3 and NS-AoS#3 information)), and, as described above in 3), recognizes that the PDU session modification request transmitted by the terminal is associated with an unavailable or changed partially allowed NSSAI (e.g., partially allowed NSSAI#1 (i.e., S-NSSAI#1 and partial tracking area identity list#1 information)), and thus, the network may determine that the terminal attempts to perform the PDU session modification request procedure based on incorrect information (e.g., partially allowed NSSAI#1). Accordingly, after transmitting the PDU session modification reject message to the terminal as described above in 3), the network immediately transmits a PDU session modification command (i.e., a network-requested PDU session modification procedure message) to the terminal. In this case, the network transmits the newly changed/updated partially allowed NSSAI (e.g., partially allowed NSSAI#2 (i.e., S-NSSAI#2 and partial tracking area identity list#2 information)).
5) The terminal that has received the PDU session modification request message from the network activates the corresponding BO timer when receiving "BO timer with partially allowed NSSAI#1 (i.e., S-NSSAI#1 and partial tracking area identity list#1 information). In this case, the terminal does not perform a PDU session modification request based on the partially allowed NSSAI#1 (i.e., S-NSSAI#1 and partial tracking area identity list#1 information) until the BO timer expires.

Subsequently, when the terminal receives, through the PDU session modification command message from the network, the newly changed/updated partially allowed NSSAI (e.g., partially allowed NSSAI#2 (i.e., S-NSSAI#2 and partial tracking area identity list#2 information)), the terminal replaces/updates the existing partially allowed NSSAI#1 with the partially allowed NSSAI#2, and then, may newly perform a PDU session establishment request procedure with the network based on the replaced/updated partially allowed NSSAI#2 (i.e., S-NSSAI#2 and partial tracking area identity list#2 information). (Always-on PDU session reactivation with alternative S-NSSAI for always-on PDU session) In this case, the terminal transmits, to the network, a PDU session establishment request message including "PDU session requested" information in order to establish an always-on PDU session. Finally, the network supporting the always-on PDU session accepts the PDU session establishment request including the "always-on PDU session requested" information based on the partially allowed NSSAI#2 transmitted by the terminal, and responds to the terminal with a PDU session establishment accept message including the "always-on PDU session required" indication. Accordingly, a service based on the always-on PDU session is provided.

### Fifth disclosure

1) A partially allowed NSSAI and NoS in the network have been newly changed. The network (AMF and/or SMF) receives the newly changed/updated partially allowed NSSAIs (e.g. partially allowed NSSAI#2 (in practice, S-NSSAI#2 and partial tracking area identity list#2 information)) and NS-AoS (e.g., NS-AoS#3 (in practice, S-NSSAI#3 and NS-AoS#3 information)) from the NSSF accordingly. In addition, the terminal configures and holds an always-on PDU session based on the unavailable or changed partially allowed NSSAI (e.g., partially allowed NSSAI#1). (The UE has the existing always-on PDU session associated with partially allowed NSSAI#1)
2) The UE, in a case in which it has not yet received the partially allowed NSSAI (and/or NS-AoS) from the network, that is, without recognizing an unavailable or changed partially allowed NSSAI (e.g., partially allowed NSSAI#1 (in practice,, S-NSSAI#1 and partial tracking area identity list#1 information)), transmits, to the network, a PDU session modification request message associated with the partially allowed NSSAI (e.g., partially allowed NSSAI#1). In this case, the terminal transmits, to the network, the PDU session modification request message including the "always-on PDU session requested" information.
3) The network recognizes that the PDU session modification request transmitted by the terminal is a PDU session modification request related to an unavailable or changed partially allowed NSSAI (e.g., partially allowed NSSAI#1 (i.e., S-NSSAI#1 and partial tracking area identity list#1 information)), and execution is not possible, and thus, the network responds to the terminal with a PDU session modification reject message. In this case, the PDU session modification reject message including information such as "BO timer with partially allowed NSSAI#1 and/or (new/updated) partially allowed NSSAI (e.g. partially allowed NSSAI#2 (i.e., S-NSSAI#2 and partial tracking area identity list#2 information)) and/or 5GSM cause value (new#wx "partial NSSAI is not allowed" or "network slice area of service is not allowed") may be transmitted.
4) The network already has the newly changed/updated partially allowed NSSAI (e.g., partially allowed NSSAI#2 (i.e., S-NSSAI#2 and partial tracking area identity list#2 information)) and NS-AoS (e.g., NS-AoS#3 (i.e., S-NSSAI#3 and NS-AoS#3 information)), and, as described above in 3), recognizes that the PDU session modification request transmitted by the terminal is associated with an unavailable or changed partially allowed NSSAI (e.g., partially allowed NSSAI#1 (i.e., S-NSSAI#1 and partial tracking area identity list#1 information)), and thus, the network may determine that the terminal attempts to perform the PDU session modification request procedure based on incorrect information (e.g., partially allowed NSSAI#1).
5) The terminal that has received the PDU session modification request message from the network activates the corresponding BO timer when receiving "BO timer with partially allowed NSSAI#1 (i.e., S-NSSAI#1 and partial tracking area identity list#1 information). In this case, the terminal does not perform a PDU session modification request based on the partially allowed NSSAI#1 (i.e., S-NSSAI#1 and partial tracking area identity list#1 information) until the BO timer expires. In this case, the terminal maintains the existing always-on PDU session (for partially allowed NSSAI#1) as it is. That is, the terminal does not perform a PDU session establishment request procedure and/or a PDU session modification request procedure additionally based on a newly changed/updated partially allowed NSSAI (e.g., partially allowed NSSAI#2 (i.e., S-NSSAI#2 and partial tracking area identity list#2 information)).

Subsequently, when the existing always-on PDU session (for partially allowed NSSAI#1) is released, when the terminal receives, through a PDU session modification reject message from the network, a newly changed/updated partially allowed NSSAI (e.g., partially allowed NSSAI#2 (i.e., S-NSSAI#2 and partial tracking area identity list#2 information)), the terminal replaces/updates the existing partially allowed NSSAI#1 with the partially allowed NSSAI#2, and then, may newly perform a PDU session establishment request procedure for an always-on PDU session with the network based on the replaced/updated partially allowed NSSAI#2 (i.e., S-NSSAI#2 and partial tracking area identity list#2 information).

### Sixth disclosure

1) A partially allowed NSSAI and NoS in the network have been newly changed. The network (AMF and/or SMF) receives the newly changed/updated partially allowed NSSAIs (e.g. allowed NSSAI#2 (in practice, S-NSSAI#2 and partial tracking area identity list#2 information)) and NS-AoS (e.g., NS-AoS#3 (in practice, S-NSSAI#3 and NS-AoS#3 information)) from the NSSF accordingly. In addition, the terminal configures and holds an always-on PDU session based on the unavailable or changed partially allowed NSSAI (e.g., partially allowed NSSAI#1). (The UE has the existing always-on PDU session associated with partially allowed NSSAI#1)
2) The terminal, in a case in which it has not yet received the partially allowed NSSAI (and/or NS-AoS) from the network, that is, without recognizing an unavailable or changed partially allowed NSSAI (e.g., partially allowed NSSAI#1 (i.e., S-NSSAI#1 and partial tracking area identity list#1 information)), transmits, to the network, a PDU session modification request message associated with the partially allowed NSSAI (e.g., partially allowed NSSAI#1). In this case, the terminal transmits, to the network, the PDU session modification request message including the "always-on PDU session requested" information.
3) The network recognizes that the PDU session modification request transmitted by the terminal is a PDU session modification request related to an unavailable or changed partially allowed NSSAI (e.g., partially allowed NSSAI#1 (i.e., S-NSSAI#1 and partial tracking area identity list#1 information)), and execution is not possible, and thus, the network responds to the terminal with a PDU session modification reject message. In this case, the PDU session modification reject message including information such as "BO timer with partially allowed NSSAI#1 and/or (new/updated) partially allowed NSSAI (e.g. allowed NSSAI#2 (i.e., S-NSSAI#2 and partial tracking area identity list#2 information)) and/or 5GSM cause value (new#wx "partial NSSAI is not allowed" or "network slice area of service is not allowed") may be transmitted.
4) The network already has the newly changed/updated partially allowed NSSAI (e.g., partially allowed NSSAI#2 (i.e., S-NSSAI#2 and partial tracking area identity list#2 information)) and NS-AoS (e.g., NS-AoS#3 (i.e., S-NSSAI#3 and NS-AoS#3 information)), and, as described above in 3), recognizes that the PDU session modification request transmitted by the terminal is associated with an unavailable or changed partially allowed NSSAI (e.g., partially allowed NSSAI#1 (i.e., S-NSSAI#1 and partial tracking area identity list#1 information)), and thus, the network may determine that the terminal attempts to perform the PDU session modification request procedure based on incorrect information (e.g., partially allowed NSSAI#1). Accordingly, after transmitting the PDU session modification reject message to the terminal as described above in 3), the network immediately transmits a configuration update command (i.e., a generic UE configuration update procedure) message to the terminal. In this case, the network transmits the newly changed/updated partially allowed NSSAI (e.g., partially allowed NSSAI#2 (i.e.,, S-NSSAI#2 and partial tracking area identity list#2 information)).
5) The terminal that has received the PDU session modification reject message from the network activates the corresponding BO timer when receiving "BO timer with partially allowed NSSAI#1 (i.e., S-NSSAI#1 and partial tracking area identity list#1 information). In this case, the terminal does not perform a PDU session modification request based on the partially allowed NSSAI#1 (i.e., S-NSSAI#1 and partial tracking area identity list#1 information) until the BO timer expires. In this case, the terminal maintains the existing always-on PDU session (for partially allowed NSSAI#1) as it is. That is, the terminal does not perform a PDU session establishment request procedure and/or a PDU session modification request procedure additionally based on a newly changed/updated partially allowed NSSAI (e.g., partially allowed NSSAI#2 (i.e., S-NSSAI#2 and partial tracking area identity list#2 information)).

Subsequently, when the existing always-on PDU session (for partially allowed NSSAI#1) is released, when the terminal receives, through the configuration update command message from the network, a newly changed/updated partially allowed NSSAI (e.g., partially allowed NSSAI#2 (i.e., S-NSSAI#2 and partial tracking area identity list#2 information)), the terminal replaces/updates the existing partially allowed NSSAI#1 with the partially allowed NSSAI#2, and then, may newly perform a PDU session establishment request procedure for an always-on PDU session with the network based on the replaced/updated partially allowed NSSAI#2 (i.e., S-NSSAI#2 and partial tracking area identity list#2 information).

### Seventh disclosure

1) A partially allowed NSSAI and NoS in the network have been newly changed. The network (AMF and/or SMF) receives the newly changed/updated partially allowed NSSAIs (e.g., partially allowed NSSAI#2 (i.e., S-NSSAI#2 and partial tracking area identity list#2 information)) and NS-AoS (e.g., NS-AoS#3 (i.e., S-NSSAI#3 and NS-AoS#3 information)) from the NSSF accordingly.
2) The terminal, in a case in which it has not yet received the partially allowed NSSAI (and/or NS-AoS) from the network, that is, without recognizing an unavailable or changed partially allowed NSSAI (e.g., partially allowed NSSAI#1 (i.e., S-NSSAI#1 and partial tracking area identity list#1 information)), transmits, to the network, a PDU session establishment request message associated with the partially allowed NSSAI (e.g., partially allowed NSSAI#1).
3) The network recognizes that the PDU session establishment request transmitted by the terminal is a PDU session establishment request associated with an unavailable or changed partially allowed NSSAI (e.g., partially allowed NSSAI#1 (i.e., S-NSSAI#1 and partial tracking area identity list#1 information)), and execution is not possible, and thus, the network responds to the terminal with a PDU session establishment reject message. In this case, the PDU session establishment reject message may be a PDU session reject message associated with a partial TA within the current RA, unlike a general PDU session establishment reject message. In this case, the PDU session reject message may include, separately/additionally to the information described in the above-described first to sixth disclosures, one or more of location availability information of the first partially allowed NSSAI (e.g., partially allowed NSSAI#1) or validity time information of the first NSSAI. In addition, the PDU session reject message may also include changed second partially allowed NSSAI (e.g., partial tracking area identity list#2 information).
4) The terminal, upon receiving the PDU session establishment reject message from the network, may determine, according to the PDU session reject message, one or more of whether to maintain the first NSSAI or whether to perform PDU session establishment associated with the second NSSAI.
5) For example, the terminal may determine one or more of whether to maintain the first NSSAI or whether to perform PDU session configuration associated with the second NSSAI based on one or more of location availability information of the first NSSAI, validity time information of the first NSSAI, or QoS information of a PDU session associated with the first NSSAI. Specifically, although a reject message is received for the PDU session request using the first NSSAI, the terminal may re-enter a TA in which the first NSSAI may be used based on the location availability information of the first NSSAI, the validity time of the first NSSAI is sufficient even with such deferral based on the validity time information of the first NSSAI, and such deferral does not cause a problem in QoS support based on the QoS information of the PDU session associated with the first NSSAI, and in this case, the terminal may maintain the first NSSAI and defer performing PDU session configuration associated with the second NSSAI.
6) However, when such deferral as described above affects the QoS of the corresponding PDU session, it is preferable that the terminal immediately performs PDU session establishment based on the second NSSAI. To this end, as described above, the PDU session reject message may include the second NSSAI, and in this case, after receiving the PDU session reject message, the terminal may immediately transmit a PDU session establishment request message associated with the second NSSAI.

### Eighth disclosure

1) First, it is assumed that the terminal and the network have established the always-on PDU session.

It is assumed that the always-on PDU session is associated with the partially allowed NSSAI (the first NSSAI).

2) A partially allowed NSSAI and NoS in the network have been newly changed. The network (AMF and/or SMF) receives the newly changed/updated partially allowed NSSAIs (e.g., partially allowed NSSAI#2 (i.e., S-NSSAI#2 and partial tracking area identity list#2 information)) and NS-AoS (e.g., NS-AoS#3 (i.e., S-NSSAI#3 and NS-AoS#3 information)) from the NSSF accordingly.

3) The terminal, in a case in which it has not yet received the partially allowed NSSAI (and/or NS-AoS) from the network, that is, without recognizing an unavailable or changed partially allowed NSSAI (e.g., partially allowed NSSAI#1 (i.e., S-NSSAI#1 and partial tracking area identity list#1 information)), transmits, to the network, a PDU session establishment request message associated with the partially allowed NSSAI (e.g., partially allowed NSSAI#1).

4) The network recognizes that the PDU session establishment request transmitted by the terminal is a PDU session establishment request associated with an unavailable or changed partially allowed NSSAI (e.g., partially allowed NSSAI#1 (i.e., S-NSSAI#1 and partial tracking area identity list#1 information)), and execution is not possible, and thus, the network responds to the terminal with a PDU session establishment reject message. In this case, the PDU session establishment reject message may be a PDU session reject message associated with a partial TA within the current RA, unlike the general PDU session establishment reject message as described above in the seventh disclosure. In this case, the PDU session reject message may include the information described in the seventh disclosure.

5) The terminal, upon receiving the PDU session establishment reject message from the network, may determine, according to the PDU session reject message, one or more of whether to maintain the first NSSAI or whether to perform PDU session establishment associated with the second NSSAI.

6) However, based on that the corresponding PDU session is an always-on PDU session, it is preferable that the terminal immediately performs PDU session establishment associated with a second NSSAI, which is a partially allowed NSSAI different from the first NSSAI. In general, the PDU session establishment request of the terminal may be requested when there is transmission data of the terminal, but in the case of the always-on PDU session, regardless of whether the terminal has data or not, the terminal may transmit a PDU session establishment request message based on the second NSSAI immediately after receiving the PDU session reject message.

### <Summary of the embodiment of the present specification>

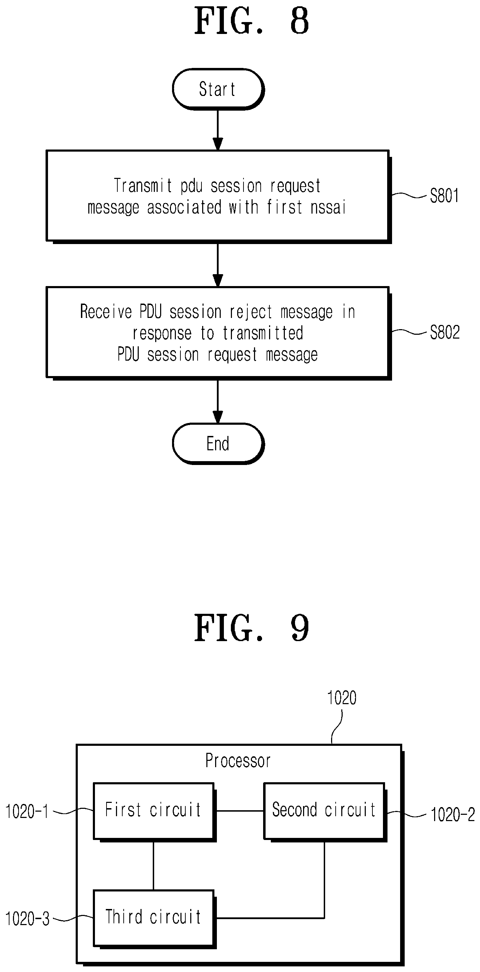

FIG. 8 shows a method of operating a terminal according to one embodiment of the present specification.

Referring to FIG. 8, the terminal transmits a PDU session request message associated with the first NSSAI (network slice selection assistance information) (S801). Subsequently, in response to the transmitted PDU session request message, a PDU session reject message is received (S802). Here, the received PDU session reject message may be used for the establishment of the always-on PDU session associated with the second NSSAI, and the first NSSAI and the second NSSAI may be different partially allowed NSSAIs.

The PDU session request message may be a PDU session establishment request message or a PDU session modification request message. In addition, the PDU session reject message may be a PDU session establishment reject message or a PDU session modification reject message.

The received PDU session establishment reject message and/or PDU session modification reject message may include a BO timer value and cause information, and based on the BO timer value, the transmission of the PDU session establishment request message and/or the PDU session modification request message associated with the first NSSAI may be back-off.

FIG. 9 shows a configuration block diagram of a processor in which the disclosure of the present specification is implemented.

As can be seen with reference to FIG. 9, the processor 1020 implemented in the disclosure of the present specification may include a plurality of circuits to implement the proposed functions, procedures, and/or methods described in the present specification. For example, the processor 1020 may include a first circuit 1020-1, a second circuit 1020-2, and a third circuit 1020-3. In addition, although not shown, the processor 1020 may include more circuits. Each circuit may include a plurality of transistors.

The processor 1020 may be referred to as an application-specific integrated circuit (ASIC) or an application processor (AP), and may include at least one of a digital signal processor (DSP), a central processing unit (CPU), and a graphics processing unit (GPU).

The processor may be mounted on a UE.

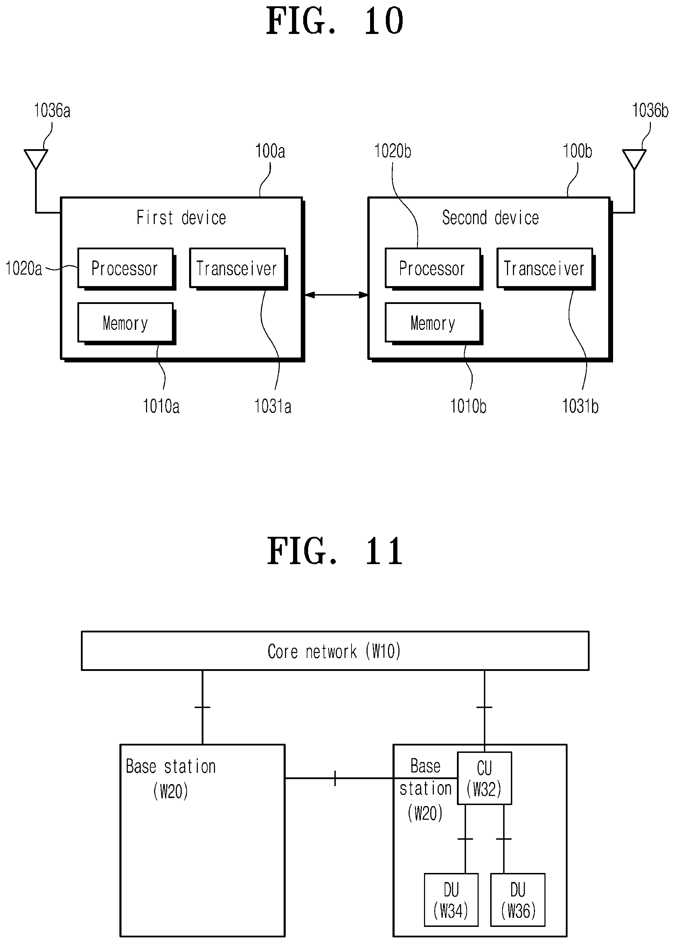

FIG. 10 shows a device according to one embodiment of the present specification.

Referring to FIG. 10, a wireless communication system may include a first device 100a and a second device 100b.

The first device 100a may be the UE described in the disclosure of the present specification. Alternatively, the first device 100a may be a base station, a network node, a transmitting UE, a receiving UE, a wireless device, a wireless communication device, a vehicle, a vehicle provided with autonomous driving capabilities, a connected car, a drone (unmanned aerial vehicle (UAV)), an artificial intelligence (AI) module, robot, an augmented reality (AR) device, a virtual reality (VR) device, a mixed reality (MR) device, a hologram device, a public safety device, an MTC device, an IoT device, a medical device, a fintech device (or a financial device), a security device, a climate/environment device, a device related to 5G services, or any other device related to the field of the Fourth Industrial Revolution.

The second device 100b may be a network node (e.g., an AMF or MME) as described in the disclosure of the present specification. Alternatively, the second device 100b may be a base station, a network node, a transmitting UE, a receiving UE, a wireless device, a wireless communication device, a vehicle, a vehicle provided with autonomous driving capabilities, a connected car, a drone (UAV), an AI module, robot, an AR device, a VR device, a MR device, a hologram device, a public safety device, an MTC device, an IoT device, a medical device, a fintech device (or a financial device), a security device, a climate/environment device, a device related to 5G services, or any other device related to the field of the Fourth Industrial Revolution.

For example, the UE 100 may include a mobile phone, a smartphone, a laptop computer, a digital broadcasting UE, a personal digital assistants (PDA), a portable multimedia player (PMP), a navigation device, a slate PC, a tablet PC, an ultra-book, a wearable device (e.g., a smartwatch-type UE (smartwatch), a smart glasses-type UE (smart glass), an head-mounted display (HMD)), etc. For example, the HMD may be a display device worn on a head. For example, the HMD may be used to implement VR, AR, or MR.

For example, the drone may be an aircraft that flies by means of wireless control signals without a person riding thereon. For example, the VR device may include a device that implements objects or backgrounds of a virtual world. For example, the AR device may include a device that implements objects or backgrounds of a virtual world by connecting them to objects or backgrounds of a real world. For example, the MR device may include a device that fuses the objects or backgrounds of the virtual world with the objects or backgrounds of the real world. For example, a holographic device may include a device that implements 360-degree stereoscopic images by recording and reproducing stereoscopic information using the light interference phenomenon that occurs when two laser beams meet, known as holography. For example, the public safety device may include a video relay device or a video device that may be worn on a user's body. For example, the MTC device and the IoT device may be devices that do not require direct human intervention or operation. For example, the MTC device and the IoT device may include a smart meter, a vending machine, a thermometer, a smart light bulb, a door lock, or various sensors. For example, the medical device may be a device used for the purpose of diagnosing, treating, alleviating, managing, or preventing diseases. For example, the medical device may be a device used for the purpose of diagnosing, treating, alleviating, managing, or correcting injuries or disabilities. For example, the medical device may be a device used for the purpose of examining, replacing, or modifying structures or functions. For example, the medical device is a device used for the purpose of controlling pregnancy. For example, the medical device may include a medical device, a surgical device, a (in vitro) diagnostic device, a hearing aid, a procedure device, etc. For example, the security device may be a device installed to prevent potential risks and maintain safety. For example, the security device may be a camera, a CCTV, a recorder, a black box, etc. For example, the fintech device may be a device capable of providing financial services such as mobile payment. For example, the fintech device may include a payment device or a point of sales (POS). For example, the climate/environment device may include a device for monitoring or predicting the climate/environment.

The first device 100a may include at least one processor such as a processor 1020a, at least one memory such as a memory 1010a, and at least one transceiver such as a transceiver 1031a. The processor 1020a may perform the above-described functions, procedures, and/or methods. The processor 1020a may perform one or more protocols. For example, the processor 1020a may perform one or more layers of a wireless interface protocol. The memory 1010a may be connected to the processor 1020a and may store various forms of information and/or commands. The transceiver 1031a may be connected to the processor 1020a and controlled to transmit and receive wireless signals.

The second device 100b may include at least one processor such as a processor 1020b, at least one memory device such as a memory 1010b, and at least one transceiver such as a transceiver 1031b. The processor 1020b may perform the above-described functions, procedures, and/or methods. The processor 1020b may implement one or more protocols. For example, the processor 1020b may implement one or more layers of a wireless interface protocol. The memory 1010b may be connected to the processor 1020b and may store various forms of information and/or commands. The transceiver 1031b may be connected to the processor 1020b and controlled to transmit and receive wireless signals.

The memory 1010a and/or the memory 1010b may be connected internally or externally to the processor 1020a and/or the processor 1020b, respectively, and may be connected to other processors through various technologies, such as wired or wireless connections.

The first device 100a and/or the second device 100b may have one or more antennas. For example, an antenna 1036a and/or an antenna 1036b may be configured to transmit and receive wireless signals.

FIG. 11 shows a block configuration diagram of a network node according to one embodiment of the present specification.

In particular, FIG. 11 shows in detail a case in which a base station is divided into a central unit CU and a distributed unit DU.

Referring to FIG. 11, base stations W20 and W30 may be connected to a core network W10, and the base station W30 may be connected to the neighboring base station W20. For example, an interface between base stations W20 and W30 and the core network W10 may be referred to as NG, and an interface between the base station W30 and the neighboring base station W20 may be referred to as Xn.

The base station W30 may be divided into a CU W32 and DU W34 and W36. That is, the base station W30 may be operated in a hierarchically separated manner. The CU W32 may be connected to one or more DU W34 and W36, and for example, an interface between the CU W32 and the DU W34 and W36 may be referred to as F1. The CU W32 may perform functions of upper layers of the base station, and the DU W34 and W36 may perform functions of lower layers of the base station. For example, the CU W32 may be a logical node hosting RRC, service data adaptation protocol (SDAP), and PDCP layers of the base station (e.g., gNB), and the DU W34 and W36 may be logical nodes hosting RLC, MAC, and physical (PHY) layers of the base station. Alternatively, the CU W32 may be a logical node hosting the RRC and PDCP layers of the base station (e.g., en-gNB).

Operations of the DU W34 and W36 may be partially controlled by the CU W32. A single DU W34 or W36 may support one or more cells. A single cell may be supported by only one DU W34 or W36. A single DU W34 or W36 may be connected to one CU W32, and by appropriate implementation, one DU W34 or W36 may be connected to multiple CU.

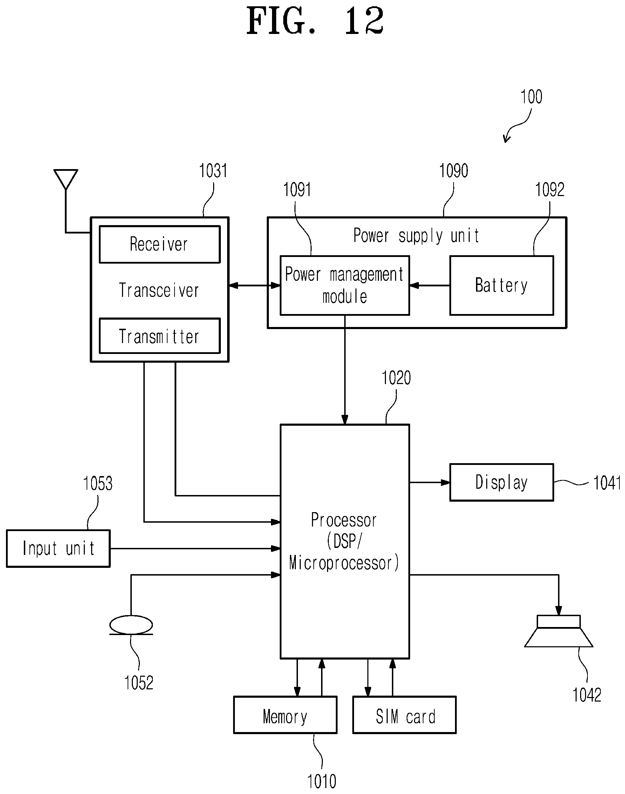

FIG. 12 is a block diagram showing a configuration of the UE according to one embodiment of the present specification.

In particular, the terminal, that is, the UE 100, shown in FIG. 12 is a view showing the first device of FIG. 10 in more detail.

The UE 100 includes a memory 1010, a processor 1020, a transceiver 1031, a power management module 1091, a battery 1092, a display 1041, an input unit 1053, a speaker 1042, a microphone 1052, a SIM card, and one or more antennas.

The processor 1020 may be configured to implement the proposed functions, procedures, and/or methods described in the present specification. Layers of wireless interface protocols may be implemented in the processor 1020. The processor 1020 may include an ASIC, other chipsets, logic circuits, and/or data processing devices. The processor 1020 may be an AP. The processor 1020 may include at least one of a DSP, a CPU, a GPU, and a modem. Examples of the processor 1020 may be a SNAPDRAGON^{™} series processor manufactured by Qualcomm^{®}, an EXYNOSTM series processor manufactured by Samsung^{®}, an A series processor manufactured by Apple^{®}, a HELIO^{™} series processor manufactured by MediaTek^{®}, an ATOM^{™} series processor manufactured by INTEL^{®}, or a corresponding next-generation processor.

The power management module 1091 manages power for the processor 1020 and/or the transceiver 1031. The battery 1092 supplies power to the power management module 1091. The display 1041 outputs results processed by the processor 1020. The input unit 1053 receives input to be used by the processor 1020. The input unit 1053 may be displayed on the display 1041. The SIM card is an integrated circuit used to securely store the International Mobile Subscriber Identity (IMSI) and associated keys used to identify and authenticate a subscriber in mobile devices such as mobile phones and computers. Contact information may also be stored in many SIM cards.

The memory 1010 is operably coupled with the processor 1020 and stores various information for operating the processor 1020. The memory 1010 may include a read-only memory (ROM), a random access memory (RAM), a flash memory, a memory card, a storage medium, and/or other storage devices. When the embodiment is implemented in software, the technologies described in the present specification may be implemented as modules (e.g., procedures, functions) that perform the functions described in the present specification. The modules may be stored in the memory 1010 and executed by the processor 1020. The memory 1010 may be implemented inside the processor 1020. Alternatively, the memory 1010 may be implemented outside the processor 1020 and communicably connected to the processor 1020 through various means known in the art.

The transceiver 1031 is operably coupled with the processor 1020 and transmits and/or receives a wireless signal. The transceiver 1031 includes a transmitter and a receiver. The transceiver 1031 may include a baseband circuit for processing a wireless frequency signal. The transceiver controls one or more antennas to transmit and/or receive the wireless signal. The processor 1020 transmits command information to the transceiver 1031 to transmit the wireless signal, for example, constituting voice communication data, to initiate communication. The antenna functions to transmit and receive a wireless signal. When the antennas receives the wireless signal, the transceiver 1031 may transmit the signal to be processed by the processor 1020 and convert the signal into a baseband. The processed signal may be converted into audible or readable information output through the speaker 1042.

The speaker 1042 outputs sound-related results processed by the processor 1020. The microphone 1052 receives sound-related input to be used by the processor 1020.

The user inputs command information, such as a phone number, for example, by pressing (or touching) a button on the input unit 1053 or by voice activation using the microphone 1052. The processor 1020 receives this command information and processes the command information to perform appropriate functions, such as making a call to the phone number. Operational data may be extracted from the SIM card or the memory 1010. In addition, the processor 1020 may display command information or driving information on the display 1041 for the user's awareness and convenience.

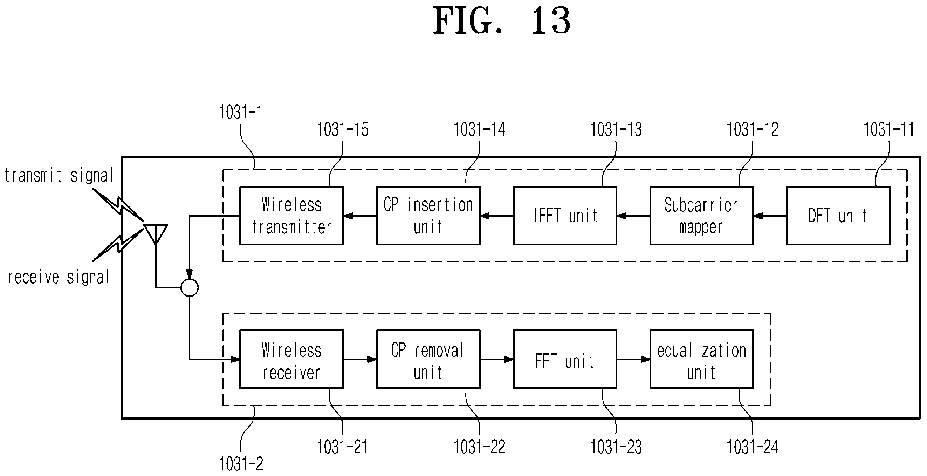

FIG. 13 is a block diagram showing in detail a transceiver of a first device shown in FIG. 10 or a transceiver of the device shown in FIG. 12.

Referring to FIG. 13, the transceiver 1031 includes a transmitter 1031-1 and a receiver 1031-2. The transmitter 1031-1 includes a discrete Fourier transform (DFT) unit 1031-11, a subcarrier mapper 1031-12, an inverse fast Fourier transform (IFFT) unit 1031-13, a CP insertion unit 1031-14, and a wireless transmitter 1031-15. The transmitter 1031-1 may further include a modulator. In addition, for example, a scramble unit (not shown), a modulation mapper (not shown), a layer mapper (not shown), and a layer permutator (not shown) may be further included, which may be disposed prior to the DFT unit 1031-11. That is, to prevent an increase in a peak-to-average power ratio (PAPR), the transmitter 1031-1 first passes the information through the DFT 1031-11 before mapping the signal to the subcarrier. A signal spread (or precoded in the same sense) by the DFT unit 1031-11 is mapped to the subcarrier through the subcarrier mapper 1031-12, and then passes through the IFFT unit 1031-13 to be converted into a signal on a time axis.

The DFT unit 1031-11 performs a DFT on input symbols to output complex-valued symbols. For example, when Ntx symbols are input (where Ntx is a natural number), the DFT size is Ntx. The DFT unit 1031-11 may be referred to as a transform precoder. The subcarrier mapper 1031-12 maps the complex-valued symbols to each subcarrier in a frequency domain. The complex-valued symbols may be mapped to resource elements corresponding to resource blocks assigned for data transmission. The subcarrier mapper 1031-12 may be referred to as a resource element mapper. The IFFT unit 1031-13 performs an IFFT on the input symbol and outputs a baseband signal for data, which is a time domain signal. The CP insertion unit 1031-14 copies a portion of the latter part of the baseband signal for the data and inserts the copied portion into the former part of the baseband signal for the data. Through CP insertion, inter-symbol interference (ISI) and inter-carrier interference (ICI) can be prevented, thereby maintaining orthogonality even in a multipath channel.

On the other hand, the receiver 1031-2 includes a wireless receiver 1031-21, a CP removal unit 1031-22, an FFT unit 1031-23, and an equalization unit 1031-24, etc. The wireless receiver 1031-21, the CP removal unit 1031-22, and the FFT unit 1031-23 of the receiver 1031-2 perform inverse functions of the wireless transmitter 1031-15, the CP insertion unit 1031-14, and the IFF unit 1031-13 of the transmitter 1031-1. The receiver 1031-2 may further include a demodulator.

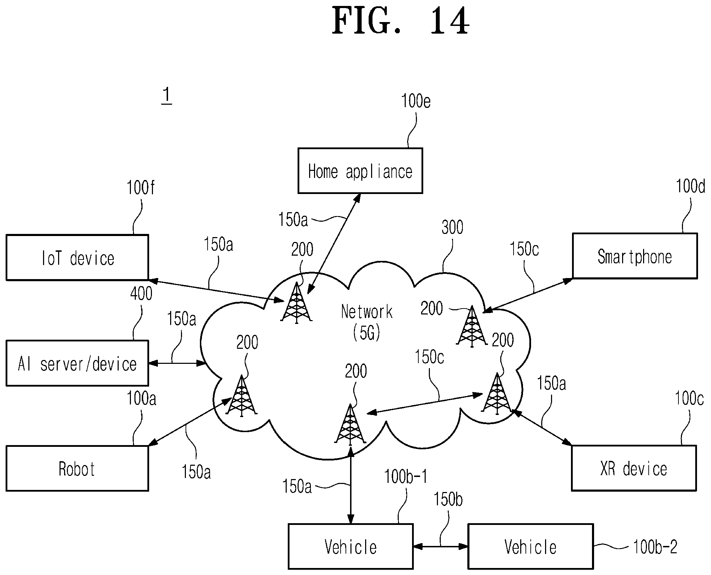

FIG. 14 shows another wireless communication system applicable to the disclosure of the present specification.

Various descriptions, functions, procedures, proposals, methods, and/or flowcharts of the disclosure of the present specification may be applied to various fields requiring wireless communication/connection (e.g., 5G) between devices.

Referring to FIG. 14, a communication system 1 applied to the disclosure of the present specification includes a wireless device, a base station, and a network. Here, the wireless device refers to a device that establishes communication using wireless access technology (e.g., 5G new RAT (NR), LTE) and may be referred to as a communication/wireless/5G device. Although not limited thereto, the wireless device may include a robot 100a, vehicles 100b-1 and 100b-2, an extended reality (XR) device 100c, a hand-held device 100d, a home appliance 100e, an IoT device 100f, and an AI device/server 400. For example, the vehicle may include a vehicle provided with wireless communication capabilities, an autonomous vehicle, a vehicle capable of performing inter-vehicle communication, etc. Here, the vehicle may include a UAV (e.g., a drone). The XR devices may include AR, VR, and MR devices and may be implemented as an HMD, an HUD installed in a vehicle, a television, a smartphone, a computer, a wearable device, a home appliance, a digital signage, a vehicle, a robot, etc. The mobile device may include a smartphone, a smart pad, a wearable device (e.g., a smartwatch, smart glasses), a computer (e.g., a laptop), etc. The home appliance may include a TV, a refrigerator, a washing machine, etc. The IoT device may include a sensor, a smart meter, etc. For example, base stations and networks may be implemented as wireless devices, and a specific wireless device 200a may function as a base station/network node for other wireless devices.

Wireless devices 100a to 100f may be connected to a network 300 through a base station 200. The wireless devices 100a to 100f may adopt AI technology and may be connected to an AI server 400 through a network. The network 300 may be configured using a 3G network, a 4G (e.g., LTE) network, or a 5G (e.g., NR) network. The wireless devices 100a to 100f may communicate with each other through the base station 200/network 300, but may also communicate directly (e.g., sidelink communication) without going through the base station/network. For example, the vehicles 100b-1 and 100b-2 may directly communicate with each other (e.g., vehicle to vehicle (V2V)/V2X communication). In addition, the IoT device (e.g., a sensor) may communicate directly with other IoT devices (e.g., a sensor) or the wireless devices 100a to 100f.

Wireless communication/connections 150a, 150b, and 150c may be established between the wireless devices 100a to 100f and the base stations 200, and between the base stations 200. Here, wireless communication/connection can be achieved through various wireless access technologies (e.g., 5G NR), such as uplink/downlink communication 150a, sidelink communication 150b (or D2D communication), and interbase station communication 150c (e.g., relay, integrated access backhaul (IAB)). Through the wireless communication/connections 150a, 150b, and 150c, wireless devices and base stations/wireless devices, and base stations can transmit/receive wireless signals to/from each other. For example, the wireless communication/connections 150a, 150b, and 150c may transmit/receive signals through various physical channels. To this end, based on various proposals disclosed in the present specification, at least some of various configuration information setting procedures for transmitting and receiving wireless signals, various signal processing procedures (e.g., channel encoding/decoding, modulation/demodulation, resource mapping/demapping, etc.), and resource assignment procedures may be performed.

While exemplary embodiments have been exemplarily described above, the disclosure of the present specification is not limited to these specific embodiments, and thus may be modified, changed, or improved in various forms within the spirit of the present specification and the scope of the appended claims.

In the exemplary system described above, the methods have been described based on flowcharts as a sequence of steps or blocks, but the methods are not limited to the order of the described steps, and some steps may occur in a different order from that described above or may occur simultaneously. In addition, those skilled in the art will understand that the steps shown in the flowcharts are not exclusive, and that other steps may be included, or one or more steps of the flowcharts may be omitted without affecting the scope of the present specification.

The claims described in the present specification may be combined in various ways. For example, technical features of method claims of the present specification may be combined to be implemented as an apparatus, and technical features of apparatus claims of the present specification may be combined to be implemented as a method. In addition, technical features of method claims and apparatus claims of the present specification may be combined to be implemented as an apparatus, or may be combined to be implemented as a method.

### [Industrial applicability]

The method and apparatus for handling an always-on PDU session of network slicing considering the service area in the above-described wireless communication system may be applied to various mobile communication systems based on 3GPP.

## Claims

1. A method of operating a terminal in a wireless communication system, the method comprising:
establishing an always-on protocol data unit (PDU) session associated with first network slice selection assistance information (NSSAI);
transmitting a PDU session request message associated with the first NSSAI; and
receiving a PDU session reject message in response to the transmitted PDU session request message,
wherein, when the first NSSAI is partially allowed NSSAI, the PDU session reject message is a PDU session reject message associated with a partial tracking area (TA) within a current registration area (RA), and
when the PDU session associated with the first NSSAI is the always-on PDU session, the PDU session reject message is used to establish a PDU session associated with second NSSAI, which is partially allowed NSSAI different from the first NSSAI.

2. The method of claim 1, wherein, when the PDU session associated with the first NSSAI is not the always-on PDU session, according to the PDU session reject message, the first NSSAI is maintained, and the establishment of the PDU session associated with the second NSSAI is deferred.

3. The method of claim 1, further comprising, when the PDU session associated with the first NSSAI is the always-on PDU session, transmitting a PDU session establishment request message associated with the second NSSAI even when there is no uplink transmission data after receiving the PDU session reject message.

4. The method of claim 1, wherein the PDU session request message is a PDU session establishment request message or a PDU session modification request message.

5. The method of claim 4, wherein the PDU session reject message is a PDU session establishment reject message or a PDU session modification reject message.

6. The method of claim 5, wherein one or more of the PDU session establishment reject message or the PDU session modification reject message include a back-off timer value and cause information.

7. The method of claim 6, wherein the transmission of the PDU session establishment request message or the PDU session modification request message associated with the first NSSAI is back-off based on the back-off timer value.

8. A communication device in a wireless communication system, comprising:
a transceiver;
at least one processor; and
at least one memory configured to store instructions and is operably electrically connected to the at least one processor,
wherein operations performed based on the instructions being executed by the at least one processor include:
establishing an always-on protocol data unit (PDU) session associated with first network slice selection assistance information (NSSAI);
transmitting a PDU session request message associated with the first NSSAI; and
receiving a PDU session reject message in response to the transmitted PDU session request message,
wherein, when the first NSSAI is partially allowed NSSAI, the PDU session reject message is a PDU session reject message associated with a partial tracking area (TA) within a current registration area (RA), and
when the PDU session associated with the first NSSAI is the always-on PDU session, the processor is configured to use the PDU session reject message for establishing a PDU session associated with second NSSAI, which is partially allowed NSSAI different from the first NSSAI.

9. The communication device of claim 8, wherein, when the PDU session associated with the first NSSAI is not the always-on PDU session, according to the PDU session reject message, the processor is configured to maintain the first NSSAI and defer the establishment of the PDU session associated with the second NSSAI.

10. The communication device of claim 8, wherein, when the PDU session associated with the first NSSAI is the always-on PDU session, the operation further includes
transmitting a PDU session establishment request message associated with the second NSSAI even when there is no uplink transmission data after receiving the PDU session reject message.

11. The communication device of claim 8, wherein the PDU session request message is a PDU session establishment request message or a PDU session modification request message.

12. The communication device of claim 11, wherein the PDU session reject message is a PDU session establishment reject message or a PDU session modification reject message.

13. The communication device of claim 12, wherein one or more of the PDU session establishment reject message or the PDU session modification reject message include a back-off timer value and cause information.

14. The communication device of claim 13, wherein, based on the back-off timer value, one or more of the transmission of the PDU session establishment request message or the PDU session modification request message associated with the first NSSAI is back-off.
